(19) Europäisches Patentamt
European Patent Office
Office européen des brevets

(11) EP 0 682 033 B1

(12) **EUROPÄISCHE PATENTSCHRIFT**

(45) Veröffentlichungstag und Bekanntmachung des Hinweises auf die Patenterteilung:
**27.09.2000 Patentblatt 2000/39**

(51) Int. Cl.$^7$: **C07F 7/18**

(21) Anmeldenummer: **95103181.4**

(22) Anmeldetag: **06.03.1995**

(54) **Hydrolisierbare und polymerisierbare Silane**
Hydrolysable and polymerisable silanes
Silanes hydrolysables et polymérisables

(84) Benannte Vertragsstaaten:
**AT BE CH DE DK FR GB IT LI LU NL SE**

(30) Priorität: **13.05.1994 DE 4416857**

(43) Veröffentlichungstag der Anmeldung:
**15.11.1995 Patentblatt 1995/46**

(73) Patentinhaber:
**FRAUNHOFER-GESELLSCHAFT ZUR FÖRDERUNG DER ANGEWANDTEN FORSCHUNG E.V.**
**80636 München (DE)**

(72) Erfinder:
- **Wolter, Herbert, Dr.**
  **D-97950 Grossrinderfeld (DE)**
- **Storch, Werner**
  **D-97080 Würzburg (DE)**

(56) Entgegenhaltungen:
**EP-A- 0 298 734**
**DE-A- 4 011 044**
**US-A- 5 075 459**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 682 033 B1

**Beschreibung**

Die Erfindung betrifft hydrolysierbare und polymerisierbare Silane, Verfahren zu deren Herstellung sowie deren Verwendung zur Herstellung von Kieselsäurepolykondensaten bzw. -heteropolykondensaten und zur Herstellung von Polymerisaten bzw. Heteropolymerisaten.

Hydrolysierbare, organisch modifizierte Silane finden eine breite Allwendung bei der Herstellung kratzfester Beschichtungen für die unterschiedlichsten Substrate, für die Herstellung von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung thermisch, photochemisch, kovalent-nucleophil oder redoxinduziert erfolgt.

So sind z.B. aus der DE 3407087 C2 kratzfeste Beschichtungen bekannt, die durch hydrolytische Kondensation einer Mischung entstehen, die u.a. aus einer hydrolysierbaren Titan- oder Zirkoniumverbindung und aus einem hydrolysierbaren, organofunktionellen Silan $R'_m(R''Y)_nSiX_{(4-m-n)}$ besteht, wobei R' z.B. Alkyl oder Alkenyl ist, R'' z.B. Alkylen oder Alkenylen und X einen hydrolysierbaren Rest darstellt.

Aus der DE 3536716 A1 sind z.B. Klebe- und Dichtungsmassen bekannt, die erhalten worden sind durch hydrolytische Kondensation eines oder mehrerer Organosilane der allgemeinen Formel $R_mSiX_{4-m}$ und gegebenenfalls einer oder mehrerer der Komponenten $SiX_4$ und/oder $R_n(R''Y)_pSiX_{4-n-p}$, wobei R und R'' z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyanogruppe darstellt.

Ferner sind handelsübliche Silane mit reaktiven Doppelbindungen bekannt, wie z.B. (Meth)Acryloxysilane des folgenden Typs,

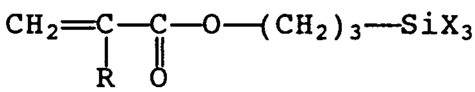

wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, daß die resultierende Beschichtung, die resultierende Füll-, Klebe- oder Dichtungsmasse oder der resultierende Formkörper durch Polymerisation an den reaktiven Doppelbindungen thermisch, photochemisch, kovalent-nucleophil oder redoxinduziert gehärtet werden kann.

Handelsübliche Silane mit reaktiven Doppelbindungen, wie z.B. die oben genannten (Meth)Acryloxysilane, stellen im allgemeinen monofunktionelle Verbindungen mit einer C=C-Doppelbindung dar und sind in der Regel niedermolekulare und somit vor der Si-X-Hydrolyse und Kondensation relativ flüchtige Verbindungen, die aufgrund der vorhandenen Acrylgruppe toxikologisch bedenklich sind. Bei der Weiterverarbeitung durch Polymerisation oder modifizierte Funktionalisierung haben diese Silane außerdem den Nachteil, daß aufgrund der Anwesenheit nur einer reaktiven C=C-Doppelbindung lediglich Kettenpolymere erhältlich sind und bei vorheriger Funktionalisierung diese für die organische Polymerisation notwendige C=C-Doppelbindung meist verloren geht. Ferner befindet sich zwischen der Doppelbindung und dem zur Bildung eines anorganischen Netzwerkes befähigten Silicium in der Regel nur eine kurze Kette , so daß die mechanischen Eigenschaften (Flexibilität etc.) über die organischen Gruppen nur in engen Grenzen variierbar sind.

Aus der DE 4011044 C2 sind zwar hydrolysierbare und polymerisierbare Silane bekannt, die über mehr als eine reaktive C=C-Doppelbindung verfügen, und bei denen der Abstand zwischen der reaktiven Doppelbindung und dem zur Bildung eines anorganischen Netzwerkes befähigten Silicium länger ist, aber es besteht immer noch Bedarf an einer Verbesserungen, auch im Hinblick auf eine Funktionalisierung des Moleküls.

Aufgabe der vorliegenden Erfindung ist es deshalb, neue, organisch modifizierte Silane bereit zu stellen, die hydrolysier- und polymerisierbar sind, die alleine, in Mischungen oder zusammen mit anderen hydrolysierbaren, kondensierbaren oder polymerisierbaren Komponenten zu kratzfesten Beschichtungen, zu Füll-, Klebe- oder Dichtungsmassen, zu Formkörpern oder zu Einbettmaterialien verarbeitet werden können. Diese Silane sollen universell einsetzbar sein, und sie sollen in ein anorganisch-organisches Verbundsystem, d.h. in ein anorganisch-organisches Netzwerk eingebaut werden können. Ferner sollen diese Silane schnell und einfach, d.h. ohne aufwendigen Syntheseprozeß herzustellen sein. Desweiteren soll der Abstand zwischen Silicium und reaktiver Doppelbindung beliebig einstellbar sein, und das Silan soll außerdem über mehrere C=C-Doppelbindungen verfügen. Ferner soll die Kette zwischen Silicium und reaktiver Doppelbindung bei Bedarf mit einer Hydroxyl- oder Carboxylgruppe funktionalisiert sein.

Gelöst wird diese Aufgabe durch hydrolysierbare und polymerisierbare Silane der allgemeinen Formel I,

$$B\{A-(Z)_d-\underset{\displaystyle R^2}{\underset{|}{R^1}}-R'-SiX_aR_b\}_c \qquad (I)$$

in der die Reste und Indices folgende Bedeutung haben:

B = ein geradkettiger oder verzweigter organischer Rest mit mindestens einer C=C-Doppelbindung und 4 bis 50 Kohlenstoffatomen;
X = Wasserstoff, Halogen, Hydroxy, Alkoxy, Acyloxy, Alkylcarbonyl, Alkoxycarbonyl oder $NR''_2$;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoffatomen, wobei diese Reste durch Sauerstoff- und Schwefelatome oder durch Aminogruppen unterbrochen sein können;
R'' = Wasserstoff, Alkyl oder Aryl;
A = O, S oder NH für d = 1 und
Z = CO und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = COOH; oder
A = O, S oder NH für d = 1 und
Z = CO und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = H; oder
A = O, S, NH oder COO für d = 1 und
Z = $CHR^3$, mit $R^3$ gleich H, Alkyl, Aryl oder Alkylaryl, und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen- unterbrochen sein können, und
$R^2$ = OH; oder
A = O, S, NH oder COO für d = 0 und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = OH; oder
A = S für d = 1 und
Z = CO und
$R^1$ = N und
$R_2$ = H;
a = 1, 2 oder 3;
b = 0, 1 oder 2;
a+b = 3;
c = 1, 2, 3 oder 4.

Die Silane der Formel I sind über die Reste B polymerisierbar und über die Reste X hydrolysierbar. Über die hydrolysierbaren Gruppen kann ein anorganisches Netzwerk mit Si-O-Si-Einheiten aufgebaut werden, während die im Rest B enthaltenen Doppelbindungen unter Aufbau eines organischen Netzwerkes polymerisieren.

Die Alkylreste sind z.B. geradkettige, verzweigte oder cyclische Reste mit 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und

t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, $SO_3H$ oder $PO_4H_2$.

Unter den Halogenen sind Fluor, Chlor und Brom und insbesondere Chlor bevorzugt.

Für $a \geq 2$ bzw. $b=2$ können die Reste X und R jeweils die selbe oder eine unterschiedliche Bedeutung haben.

Der Rest B leitet sich ab von einer substituierten oder unsubstituierten Verbindung $B(AH)_c$ mit mindestens einer C=C-Doppelbindung, wie z.B. Vinyl-, Allyl-, Acryl-, und/oder Methacrylgruppen, und 4 bis 50, vorzugsweise 6 bis 30 Kohlenstoffatomen. Vorzugsweise leitet sich B ab von einer substituierten oder unsubstituierten Verbindung mit zwei oder mehreren Acrylat- oder Methacrylatgruppen. Derartige Verbindungen werden im folgenden als (Meth)Acrylate bezeichnet. Falls die Verbindung $B(AH)_c$ substituiert ist, können die Substituenten unter den oben genannten Substituenten ausgewählt sein. Die Gruppe -AH kann -OH, -SH, $-NH_2$ oder -COOH sein und c kann Werte von 1 bis 4 einnehmen.

Ohne Einschränkung der Allgemeinheit sind konkrete Beispiele für Reste B:

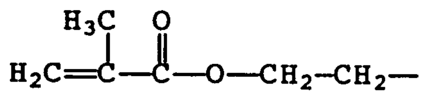

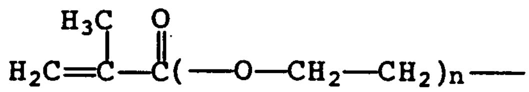
mit n = 1 bis 9

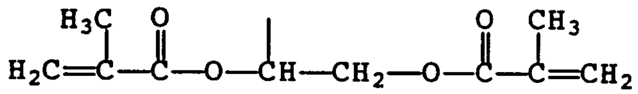

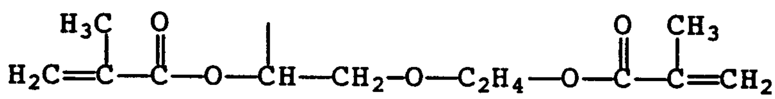

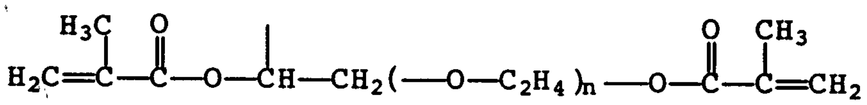
mit n = 2 - 9

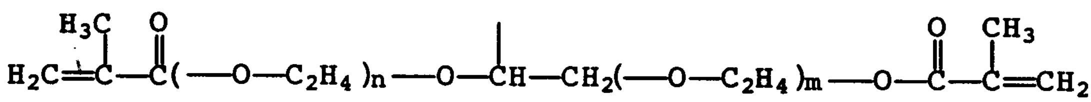

mit m = 1 - 6 und n = 1 - 6 und m+n = 2 - 8

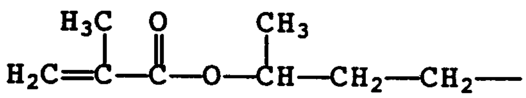

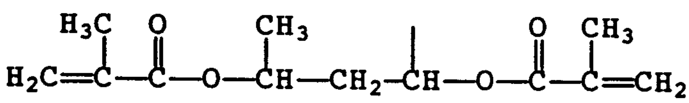

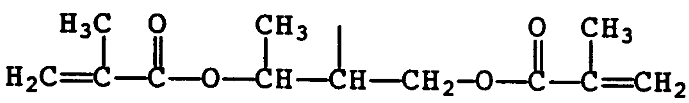

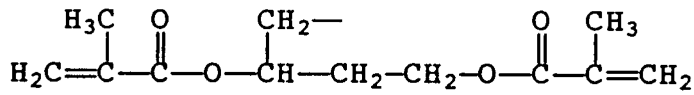

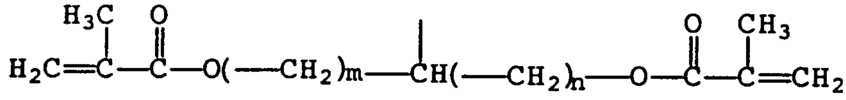

mit n und m gleich 0 bis 11 und m+n = 0 bis 11

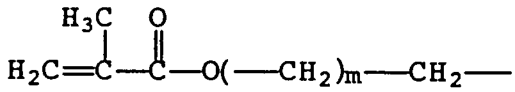

mit m = 1 - 11

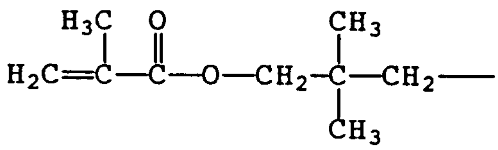

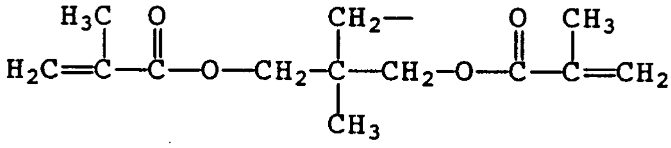

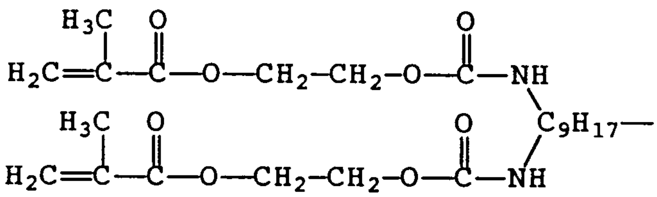

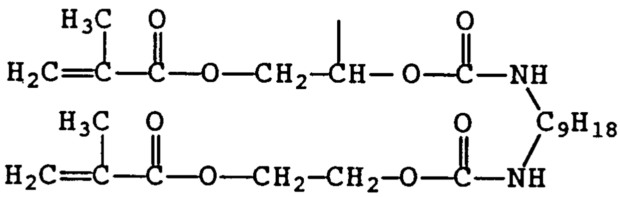

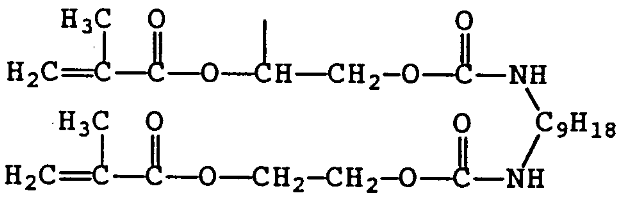

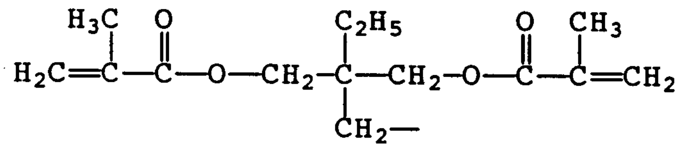

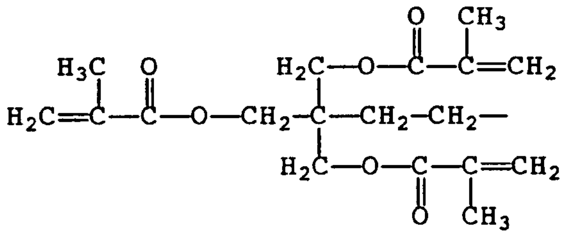

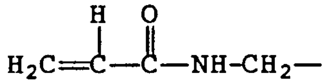

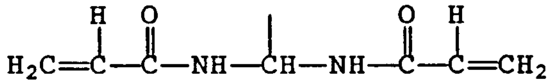

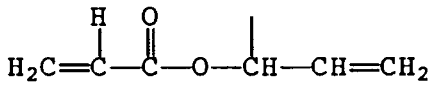

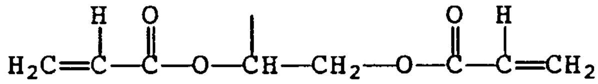

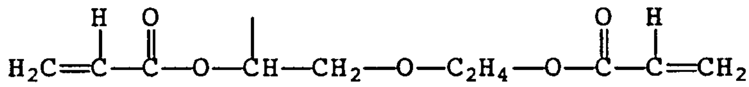

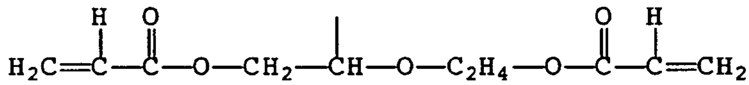

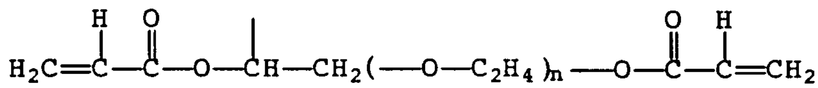

mit n = 2 - 9

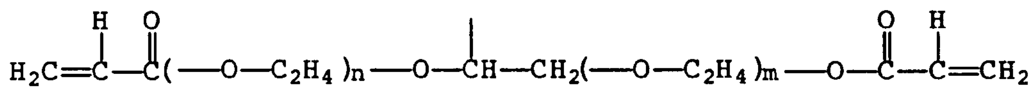

mit m = 1 - 6 und n = 1 - 6 und m+n = 2 - 8

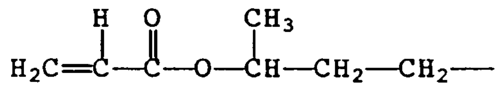

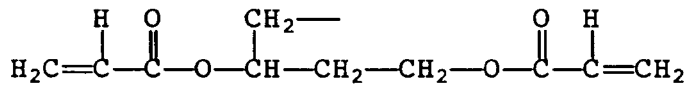

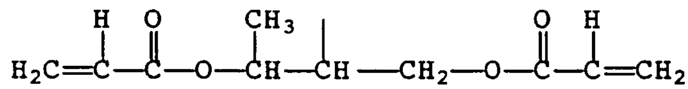

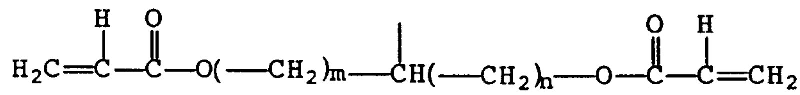

mit n und m gleich 0 bis 11 und m+n = 0 bis 11

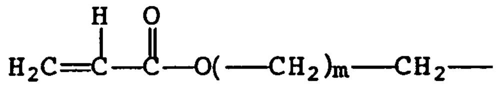

mit m = 1 - 11

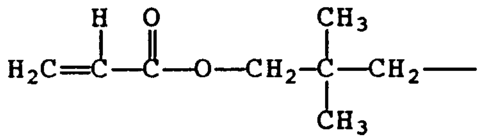

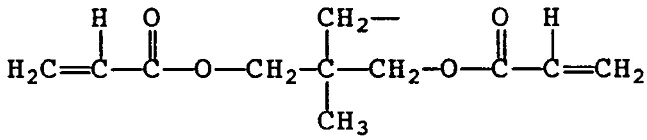

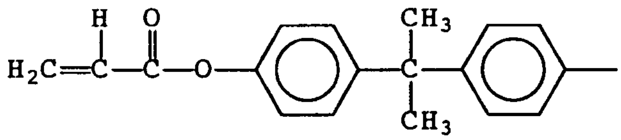

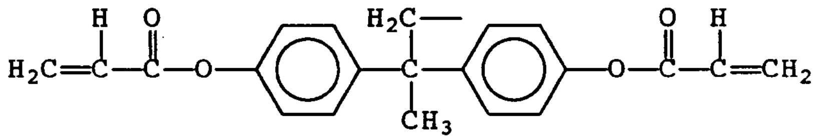

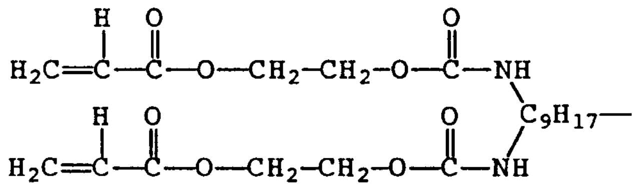

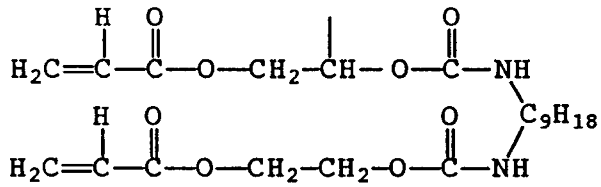

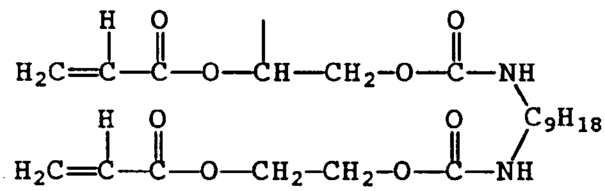

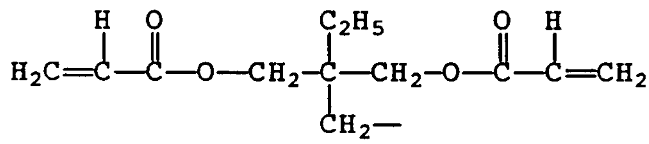

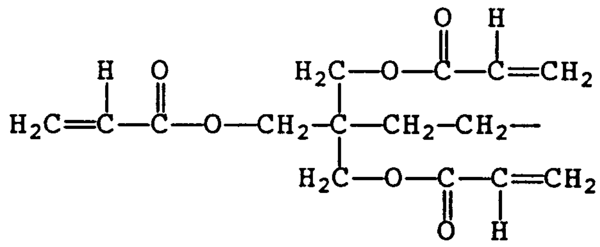

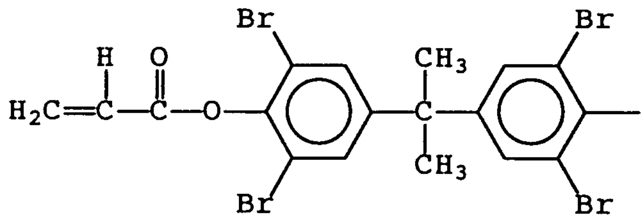

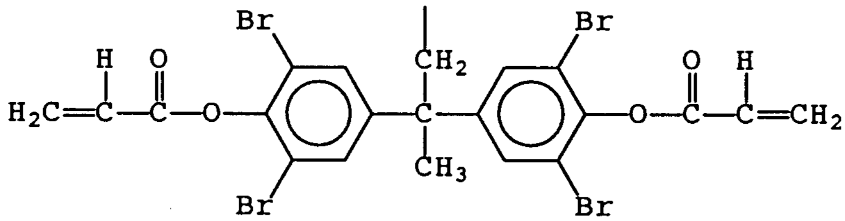

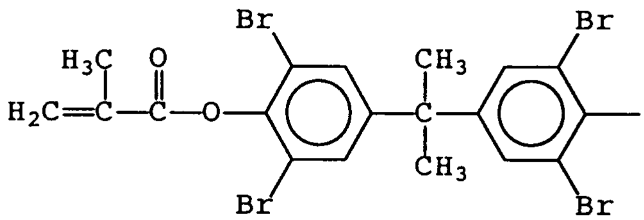

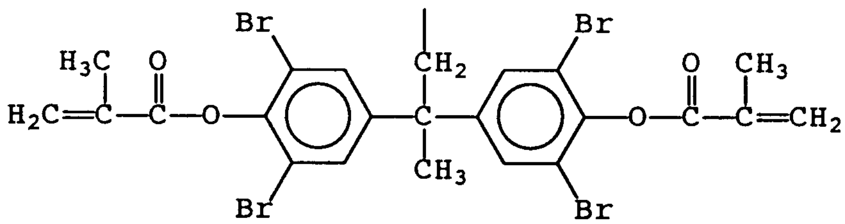

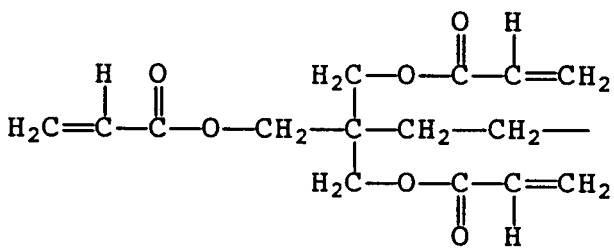

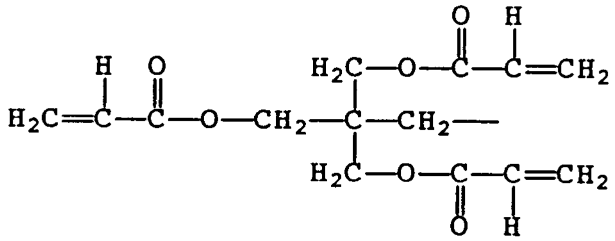

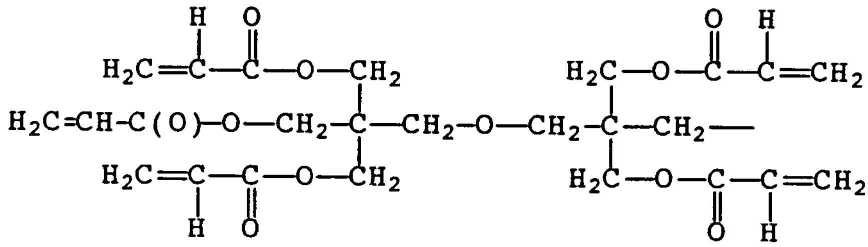

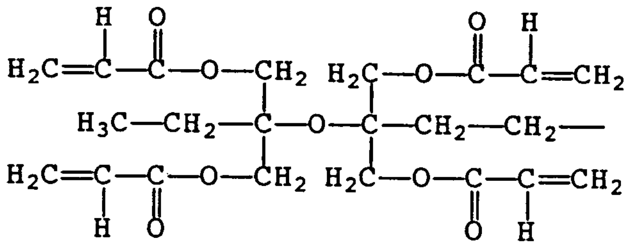

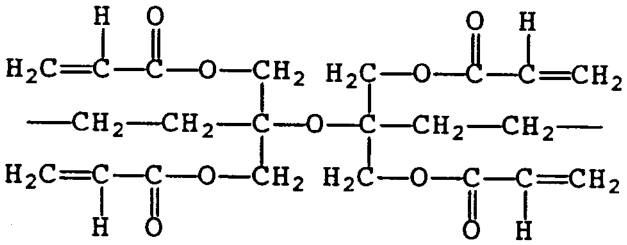

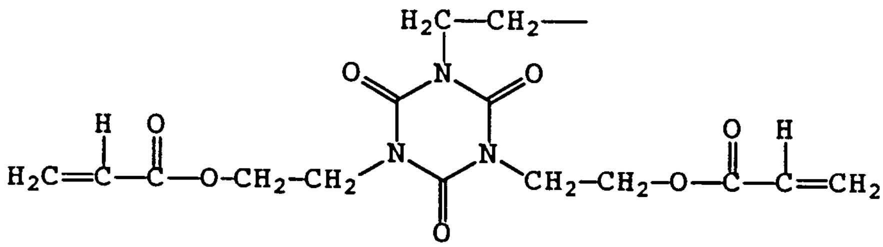

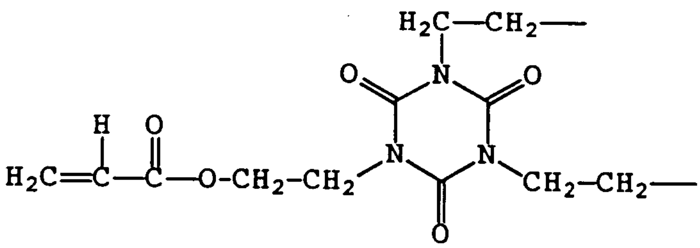

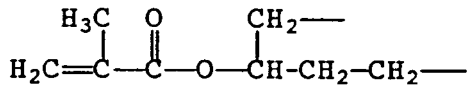

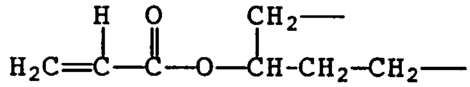

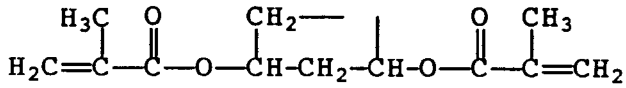

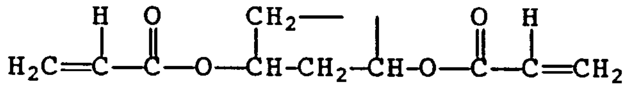

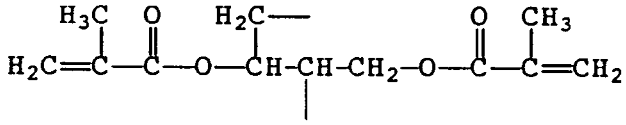

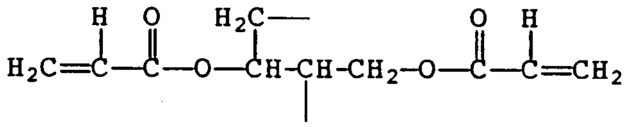

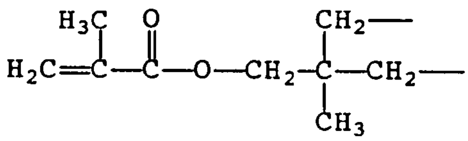

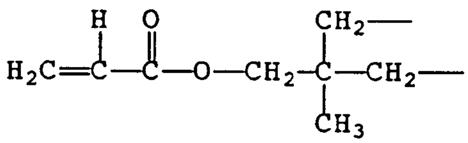

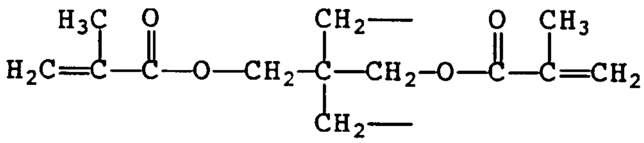

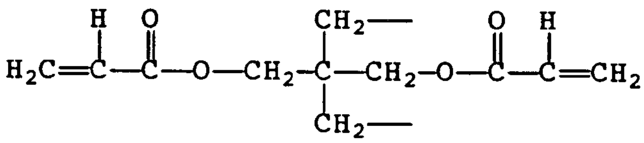

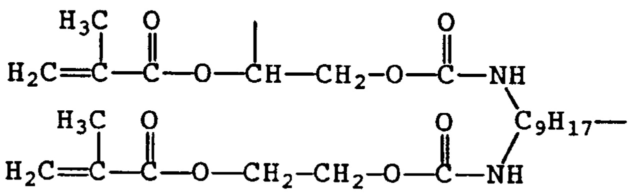

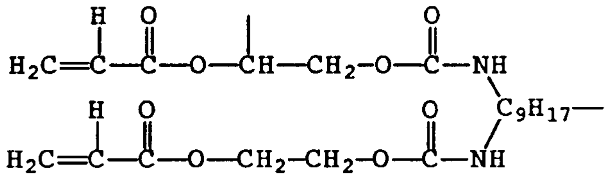

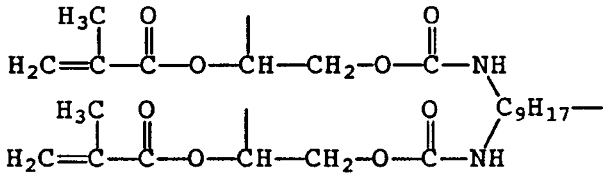

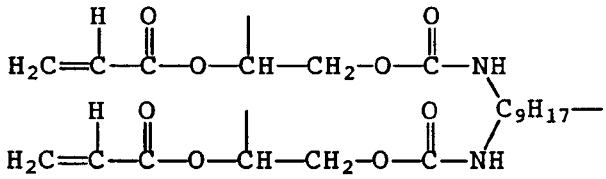

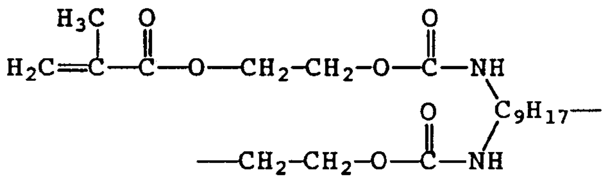

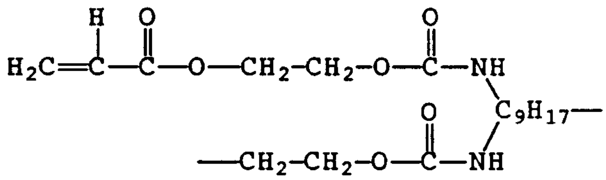

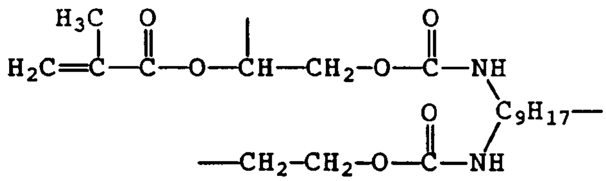

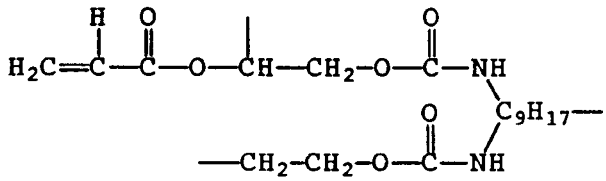

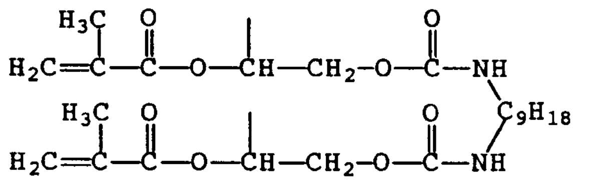

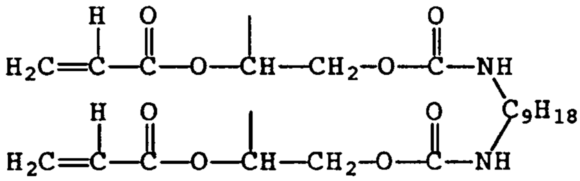

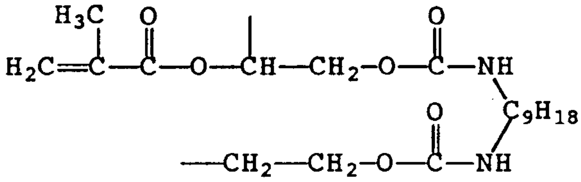

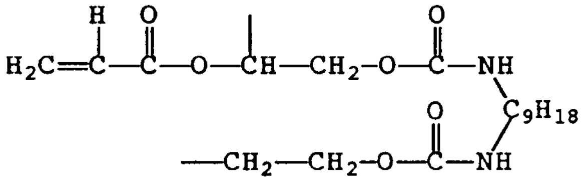

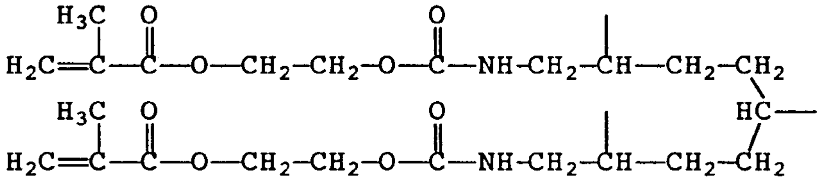

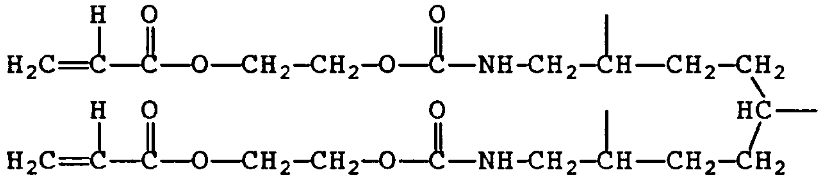

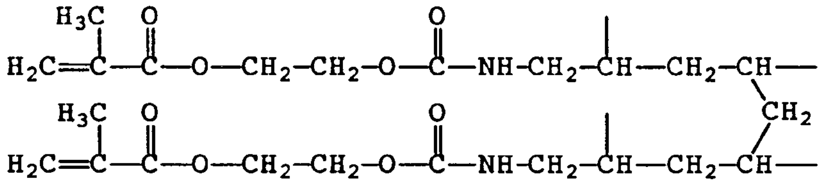

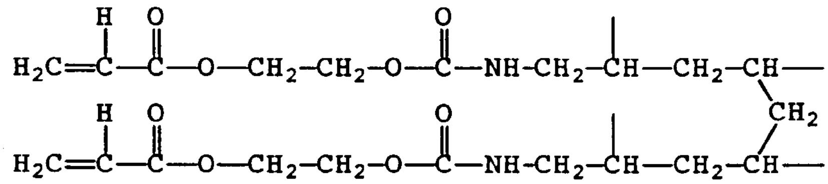

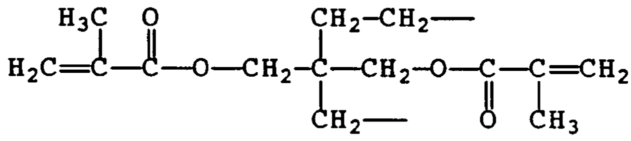

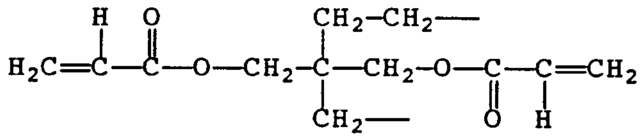

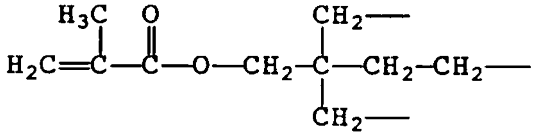

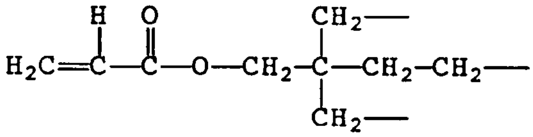

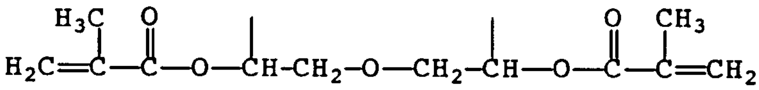

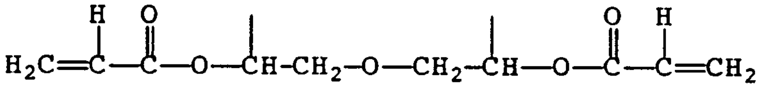

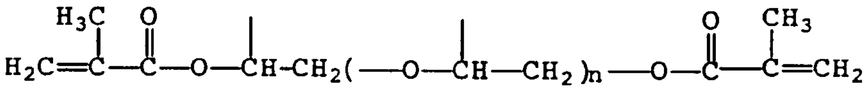

n = 2 - 3

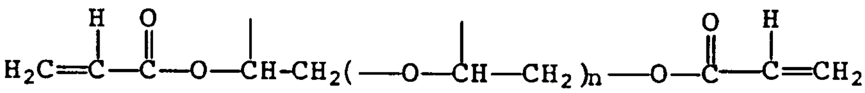

n = 2 - 3

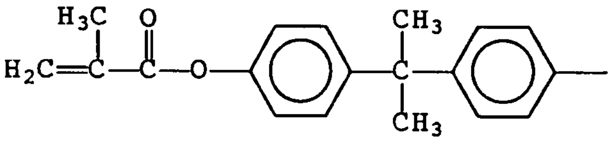

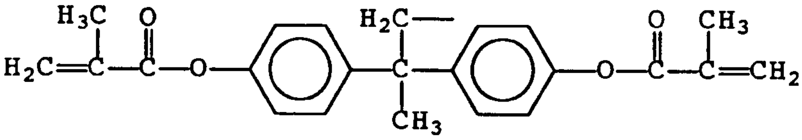

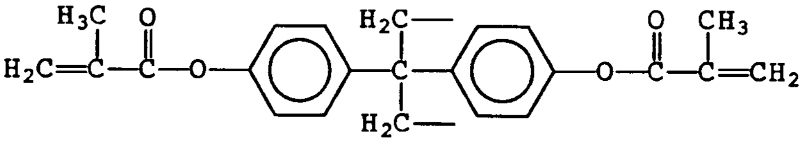

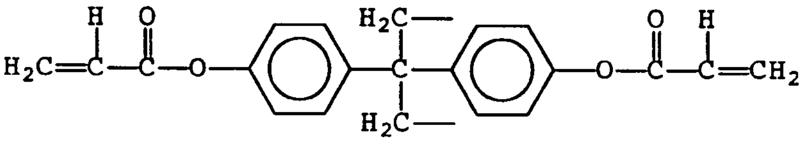

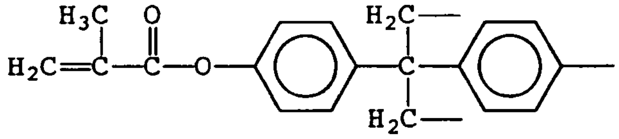

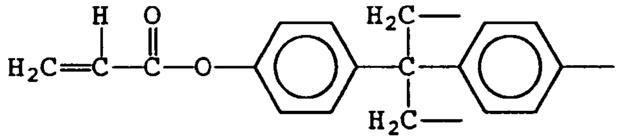

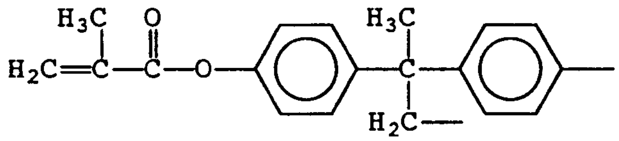

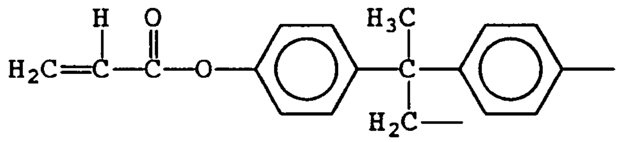

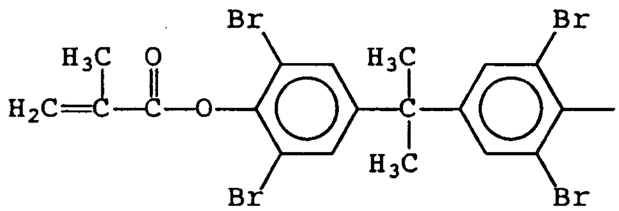

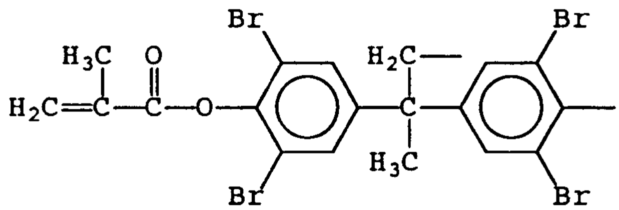

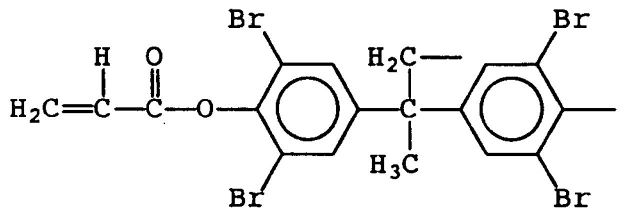

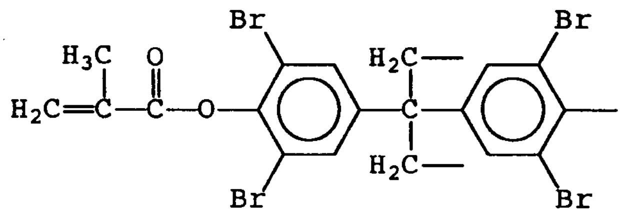

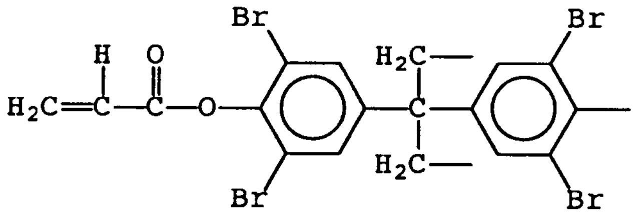

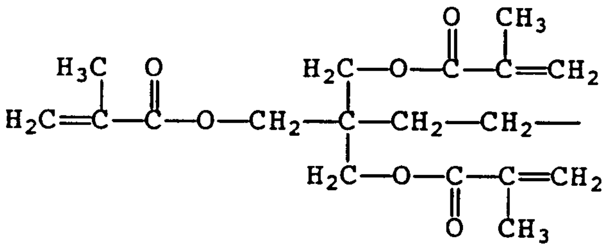

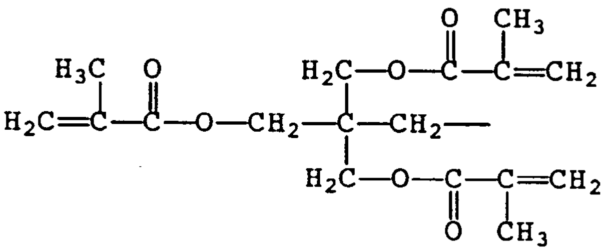

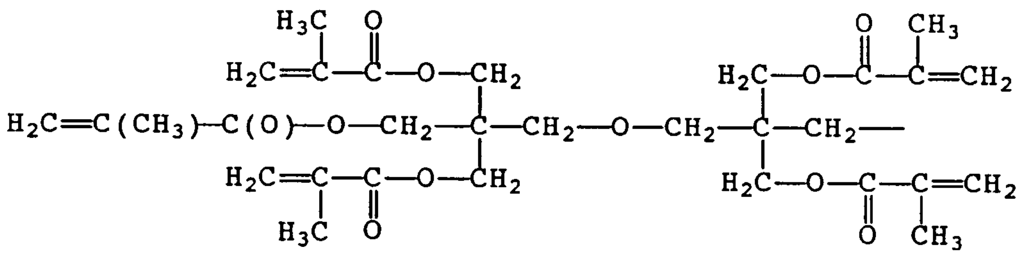

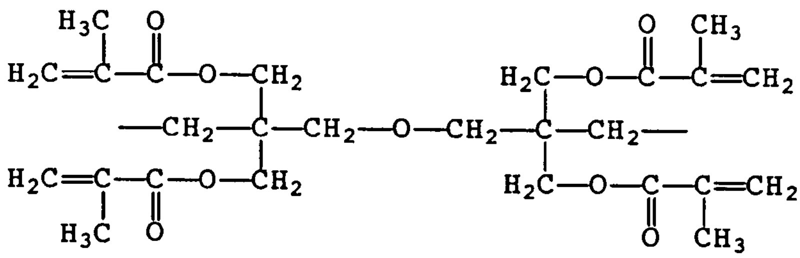

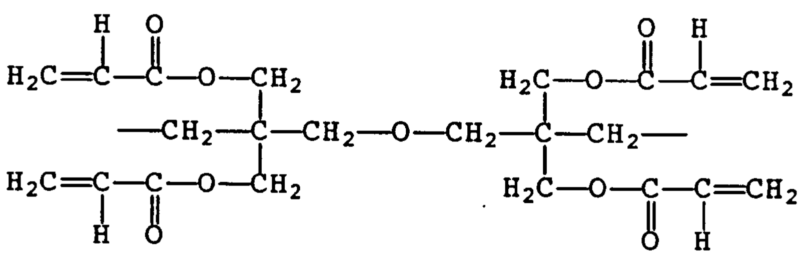

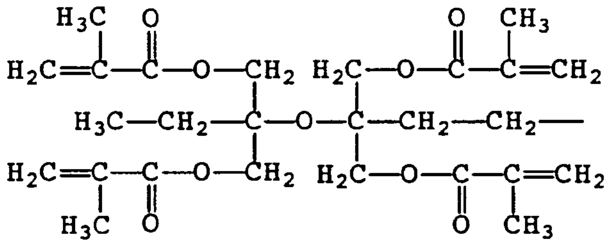

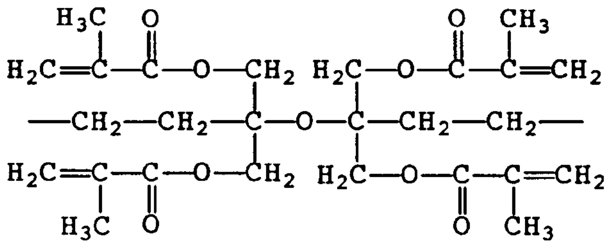

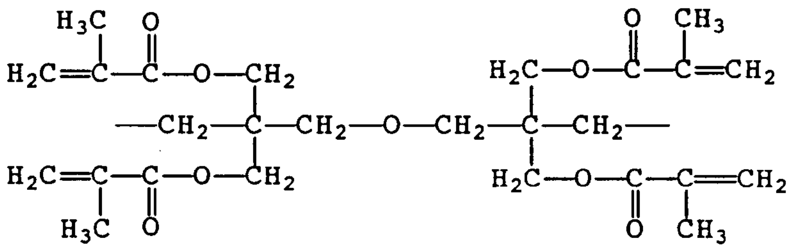

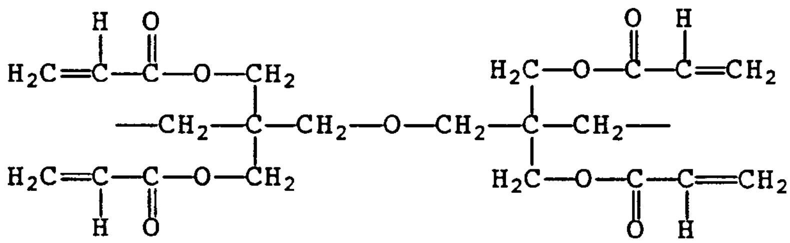

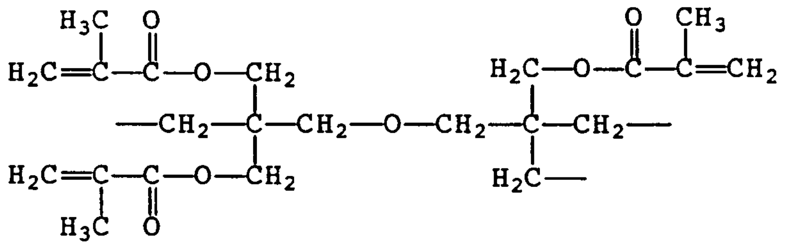

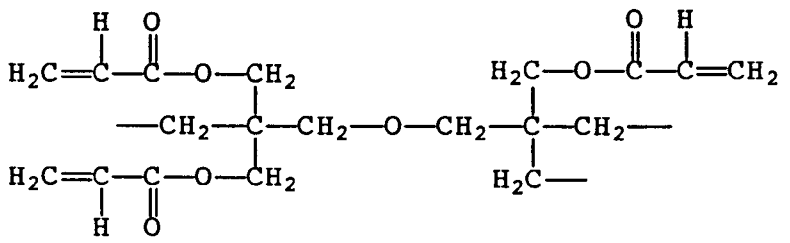

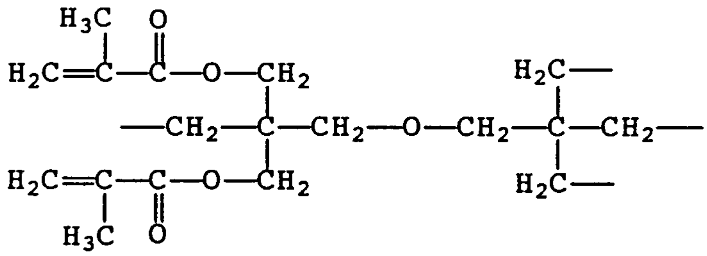

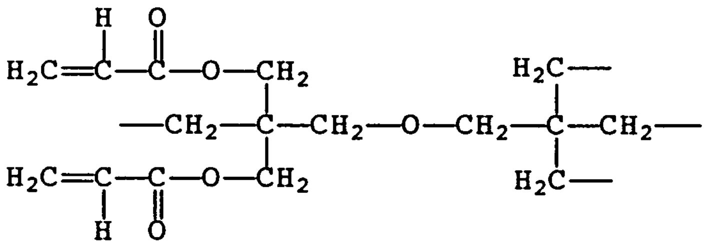

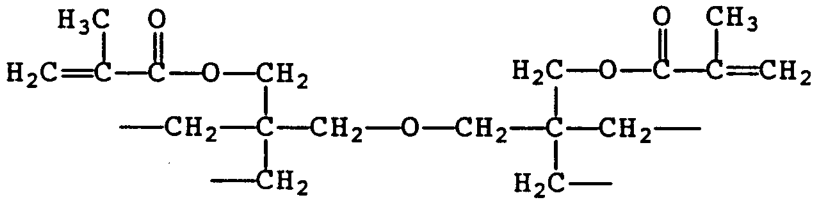

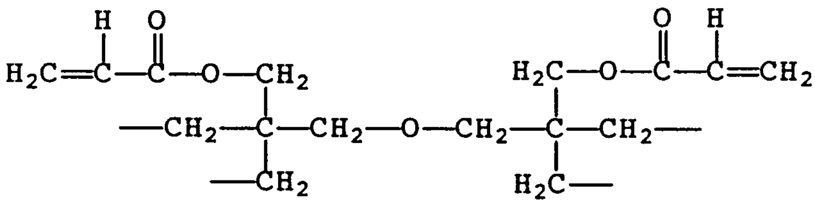

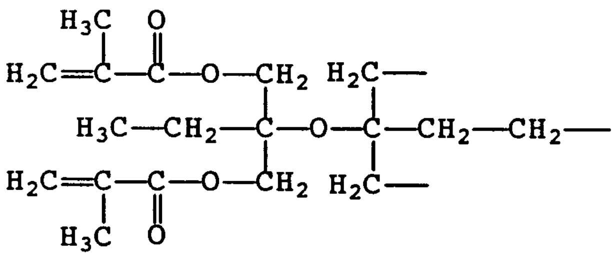

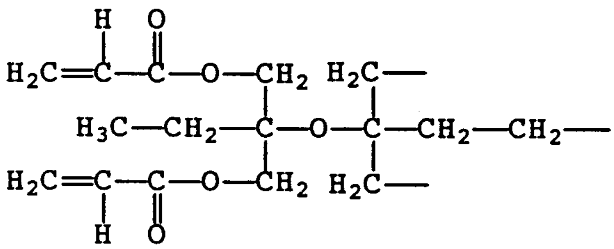

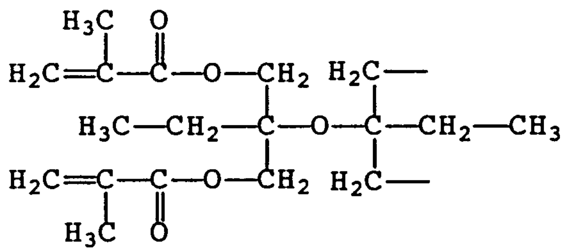

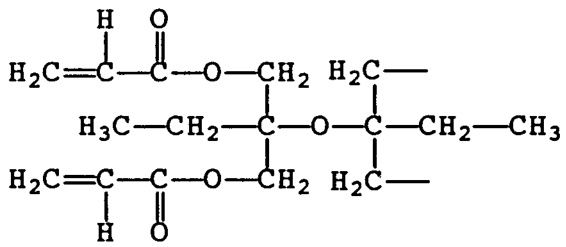

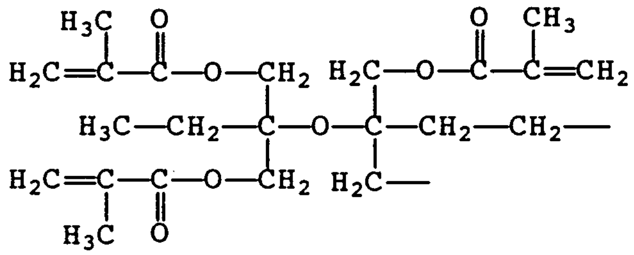

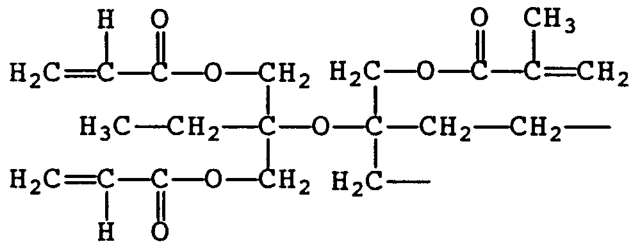

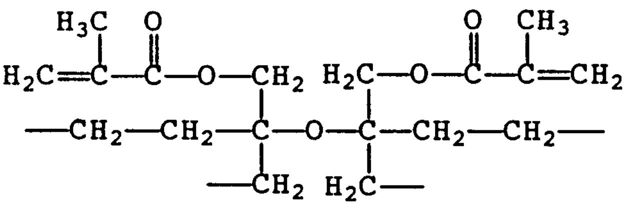

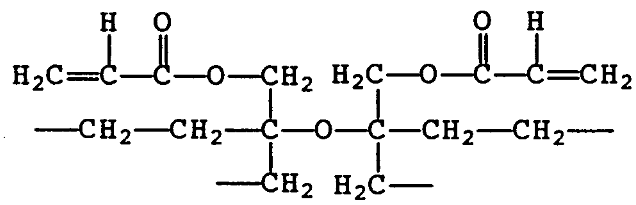

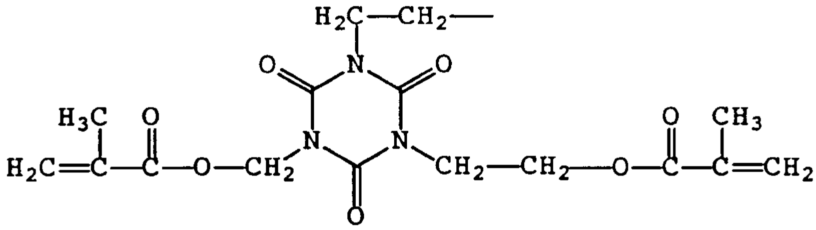

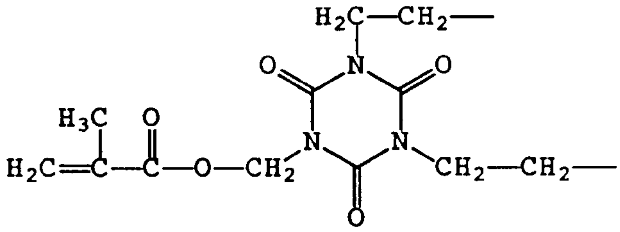

$CH_2$=CH-O-$(CH_2)_3$-$CH_2$-, $CH_2$=CH-CO-NH-$CH_2$-, $CH_2$=CH-$CH_2$-

$CH_2$=CH-$(CH_2)_2$-$CH_2$-, $CH_2$=CH-$CH_2$-$CH_2$-, -$CH_2$-CH=CH-$CH_2$-

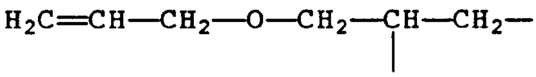 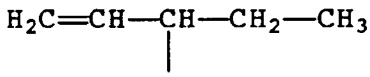

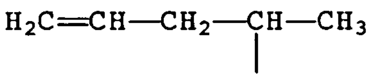

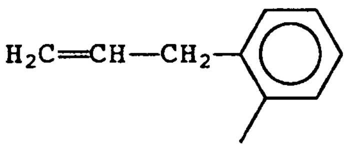 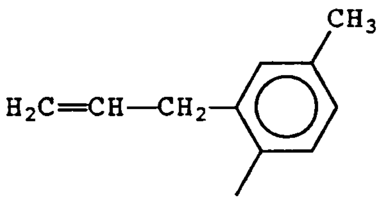 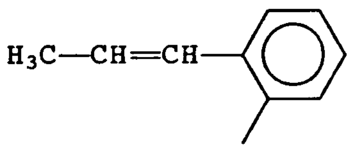

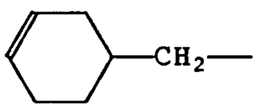 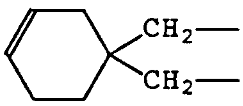

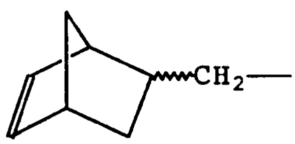 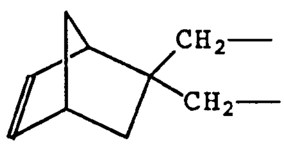

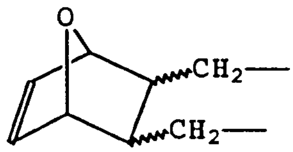 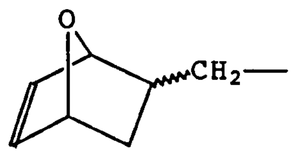

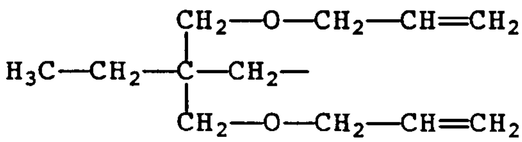

Über seine freien Valenzen ist der Rest B jeweils mit einer Gruppierung -$A(Z)_d$- verknüpft, die folgende Ausgestaltungen haben kann:

-O-CO-, -S-CO-, -NH-CO-, -O-$CH_2$-, -O-CHR-, -S-$CH_2$-, -S-CHR-, -NH-$CH_2$-, -NH-CHR-, -CO-O-$CH_2$-, -CO-O-CHR-, -O-, -S-, -NH- und -CO-O-, mit R = Alkyl, Aryl oder Alkylaryl.

Die Alkylreste sind geradkettige, verzweigte oder cyclische Reste mit 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl. Bevorzugte Arylreste sind Phenyl, Biphenyl und Naphthyl.

Die erfindungsgemäßen Silane können z.B. dadurch hergestellt werden, daß man in an sich bekannter Weise

a) ein cyclisches Carbonsäureanhydrid mit beliebiger Ringgröße der allgemeinen Formel II,

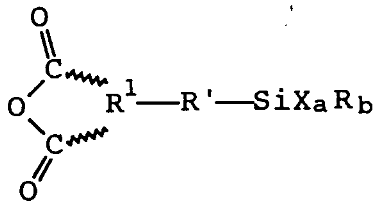

(II)

in der X, R, R', a, b und a+b wie in Anspruch 1 definiert sind und $R^1$ Alkylen, Arylen oder Alkylenarylen bedeutet,

einer Additionsreaktion mit einer Verbindung der allgemeinen Formel $B(AH)_c$ unterwirft, in der B und c wie in Anspruch 1 definiert sind und A gleich O, S oder NH bedeutet; oder

b) ein Carbonsäurederivat der allgemeinen Formel III,

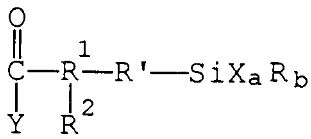

(III)

in der X, R, R', a, b und a+b wie in Anspruch 1 definiert sind, Y gleich Cl, OH oder OR* ist, $R^2$ gleich H, und $R^1$ und R* Alkylen oder Alkylenarylen bedeuten,

einer Kondensationsreaktion mit einer Verbindung der allgemeinen Formel $B(AH)_c$ unterwirft, in der B und c wie in Anspruch 1 definiert sind und A O, S oder NH bedeutet; oder

c) ein gegebenenfalls substituiertes Epoxid der allgemeinen Formel IV oder IX

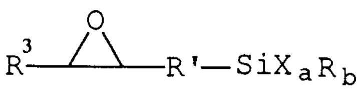

(IV)

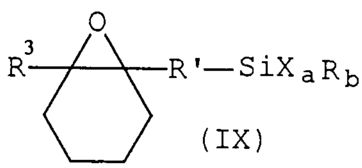

(IX)

in der X, R, R', $R^3$, a, b und a+b wie in Anspruch 1 definiert sind,

einer Additionsreaktion mit einer Verbindung der allgemeinen Formel $B(AH)_c$ unterwirft, in der B und c wie in Anspruch 1 definiert sind und A O, S, NH oder COO bedeutet; oder

d) ein Silan der allgemeinen Formel V

$$OCN\text{-}R'\text{-}SiX_aR_b \quad (V)$$

in der X, R, R', a, b und a+b wie in Anspruch 1 definiert sind,

einer Additionsreaktion mit einer Verbindung der allgemeinen Formel $B(AH)_c$ unter wirft, in der B und c wie in Anspruch 1 definiert sind und A Schwefel bedeutet.

Konkrete Beispiele für Edukte $B(AH)_c$ (c = 1 - 4) sind gegeben, wenn die freien Valenzen der konkreten Beispiele für Reste B der vorangegangenen Seiten jeweils mit Gruppierungen AH abgesättigt sind, wobei AH gleich OH, SH, $NH_2$ oder COOH bedeutet.

Im Folgenden werden anhand von konkreten Reaktionsgleichungen die Syntheseprinzipien näher erläutert.

Typ a) (mit $B(AH)_c$ = BOH)

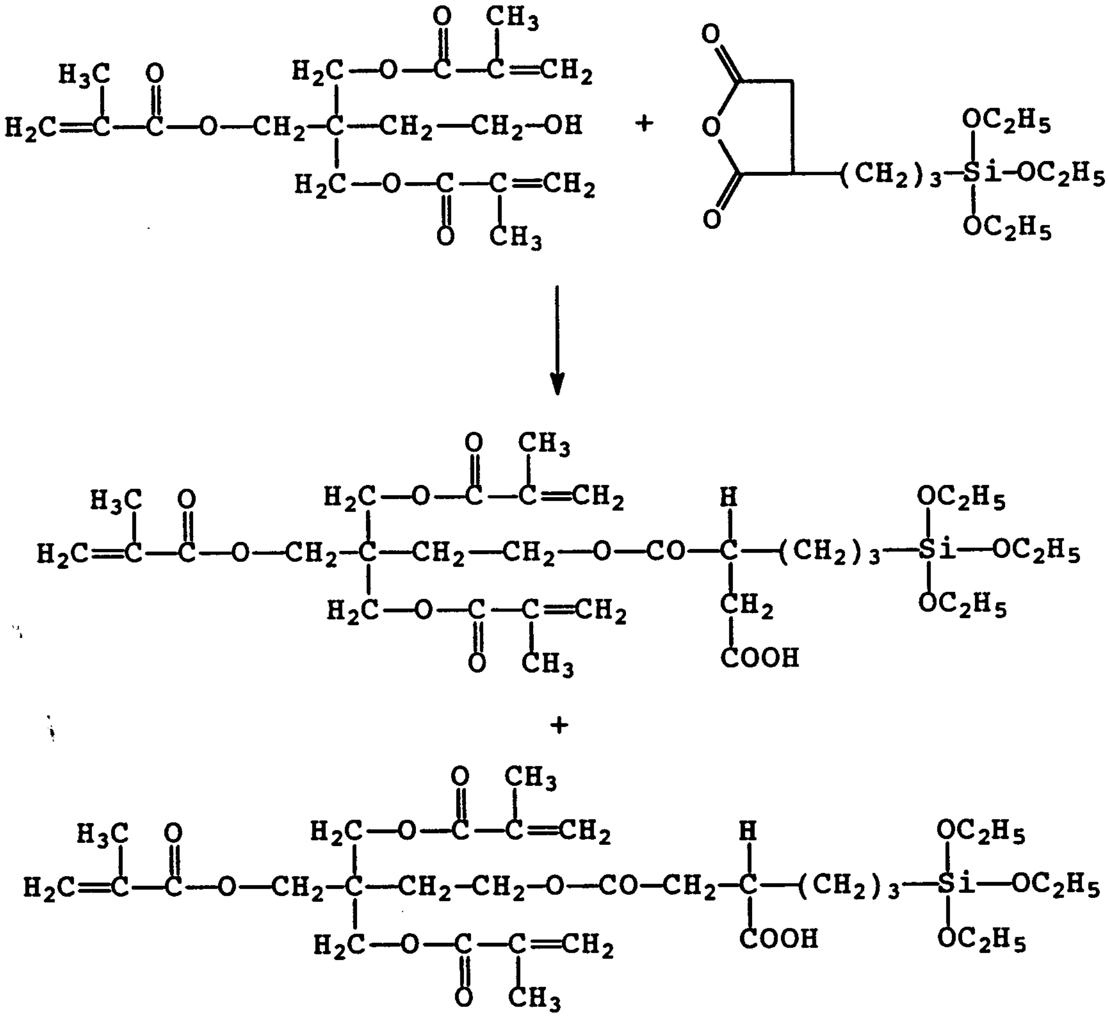

$R^1$ = 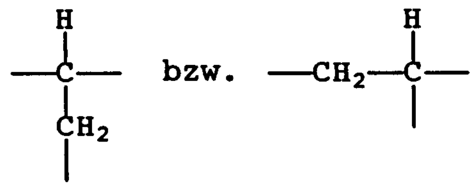 bzw.

-A- = -O-, -Z- = -CO-, $-R^2$ = -COOH, -R'- = $-(CH_2)_3-$,
-X = $-OC_2H_5$, a = 3, b = 0, c = 1 und d = 1

Analoge Umsetzungen sind für $B(AH)_c = B(OH)_c$, $B(SH)_c$ und $B(NH_2)_c$ möglich, mit c = 1 - 4. Ganz allgemein gilt:

$$B(AH)_c \quad + \quad c \quad OC\text{-}O\text{-}CO\text{-}R_1\text{-}R'\text{-}SiX_aR_b \quad \Rightarrow \quad B(A\text{-}CO\text{-}\underset{\displaystyle COOH}{\underset{|}{R^1}}\text{-}R'\text{-}SiX_aR_b)_c$$

Typ b) (mit $B(AH)_c$ = BOH und Y-CO- = Cl-CO-)

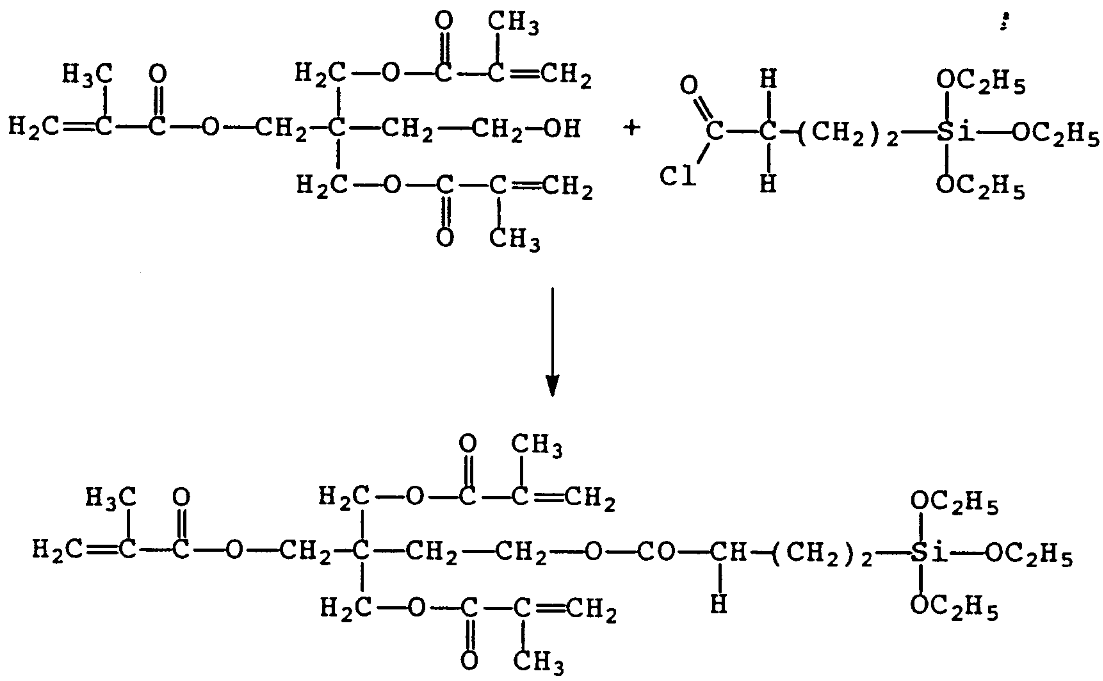

$-A- = -O-$, $-Z- = -CO-$, $-R^1- = -CH-$, $-R^2 = -H$, $-R'- = -(CH_2)_2-$, $-X = -OC_2H_5$, a = 3, b = 0, c = 1 und d = 1.

Analoge Umsetzungen sind für $B(AH)_c = B(OH)_c$, $B(SH)_c$, $B(COOH)_c$ und $B(NH_2)_c$ möglich, mit c = 1 bis 4. Ganz allgemein gilt:

$$B(AH)_c \quad + \quad c \; Y\text{-}CO\text{-}R^1H\text{-}R'\text{-}SiX_aR_b \quad \xRightarrow{-\,c\,HY} \quad B(A\text{-}CO\text{-}R^1H\text{-}R'\text{-}SiX_aR_b)_c$$

Typ c) (mit $B(AH)_c = BOH$)

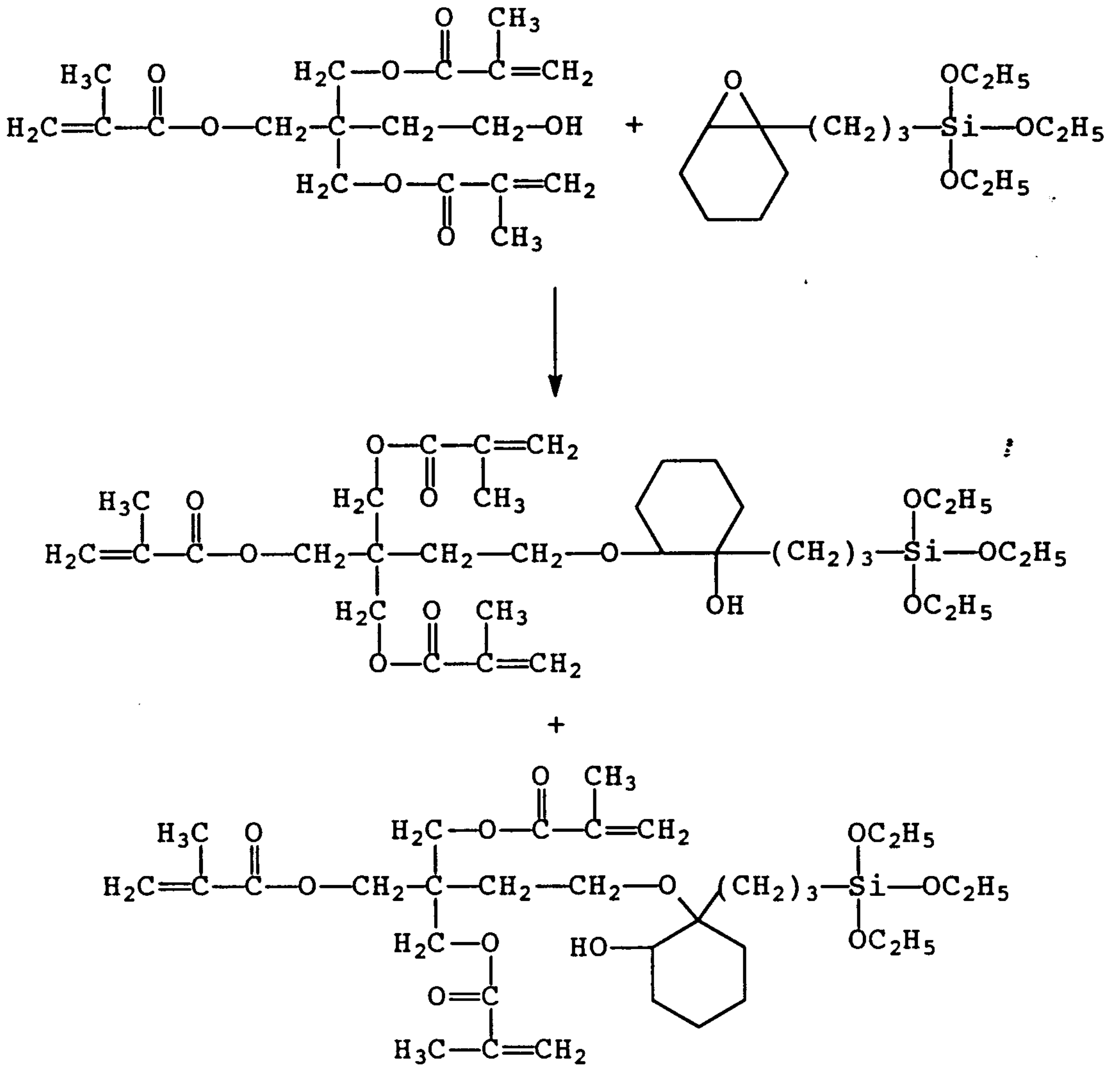

$R^1 =$

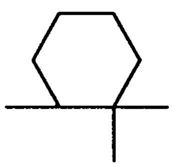

bzw.

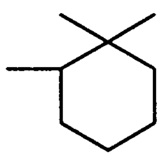

$-A- = -O-$, $-R^2 = -OH$, $-R'- = -(CH_2)_3-$, $-X = -OC_2H_5$, $a = 3$, $b = 0$, $c = 1$ und $d = 0$.

bzw.

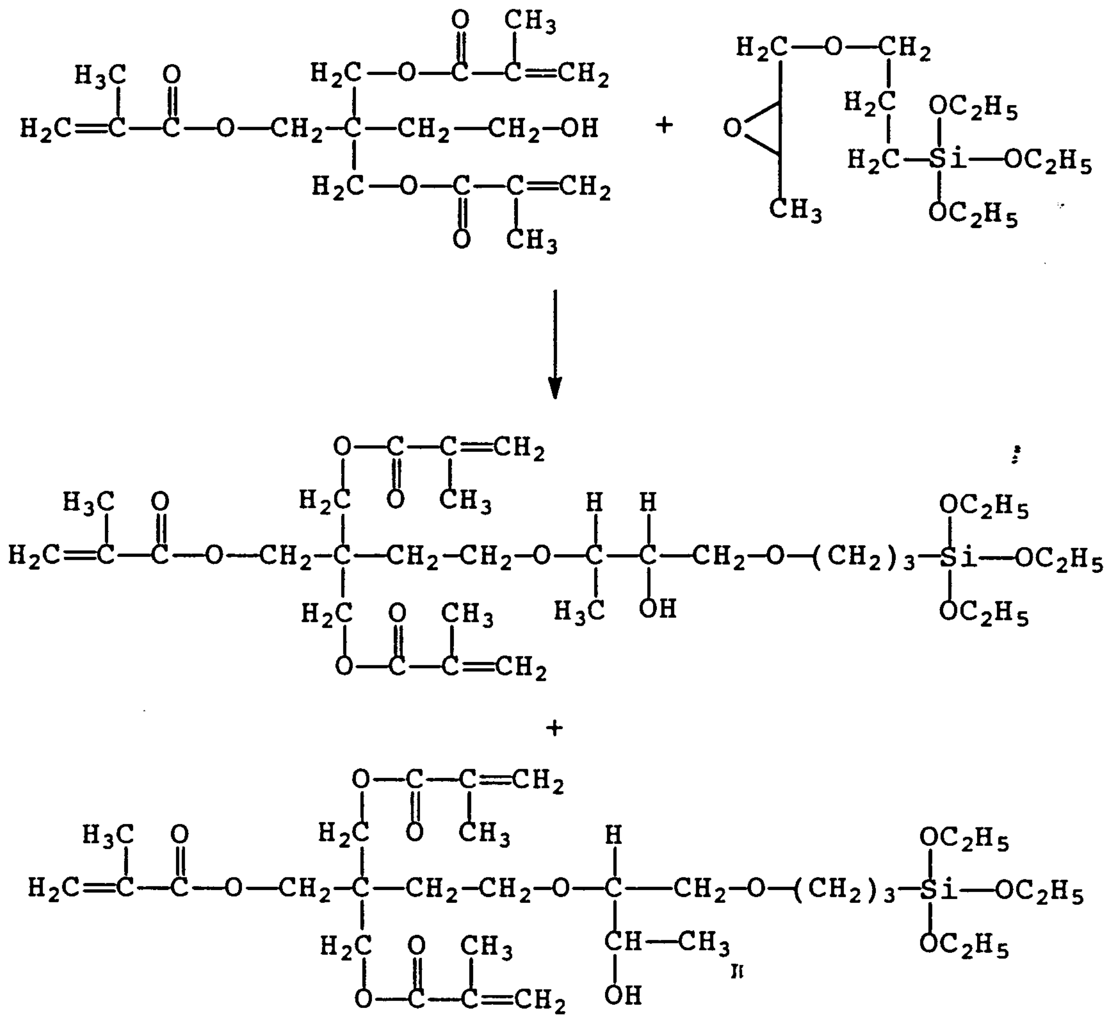

$R^1$ =

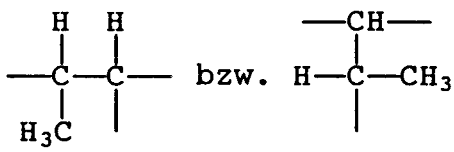

-A- = -O-, $-R^2$ = -OH, -R'- = $-CH_2-O-(CH_2)_3-$, -X = $-OC_2H_5$, a = 3, b = 0, c = 1, d = 0.

Analoge Umsetzungen sind für $B(AH)_c$ = $B(OH)_c$, $B(SH)_c$, B(COOH)c und $B(NH_2)_c$ möglich, mit c = 1 bis 4. Ganz allgemein gilt:

$$B(AH)_c + cOR^1\text{-}R'\text{-}SiX_aR_b \Rightarrow B(A\text{-}R^1(OH)\text{-}R'\text{-}SiX_aR_b)_c$$

Typ d) (mit $B(AH)_c$ = BSH)

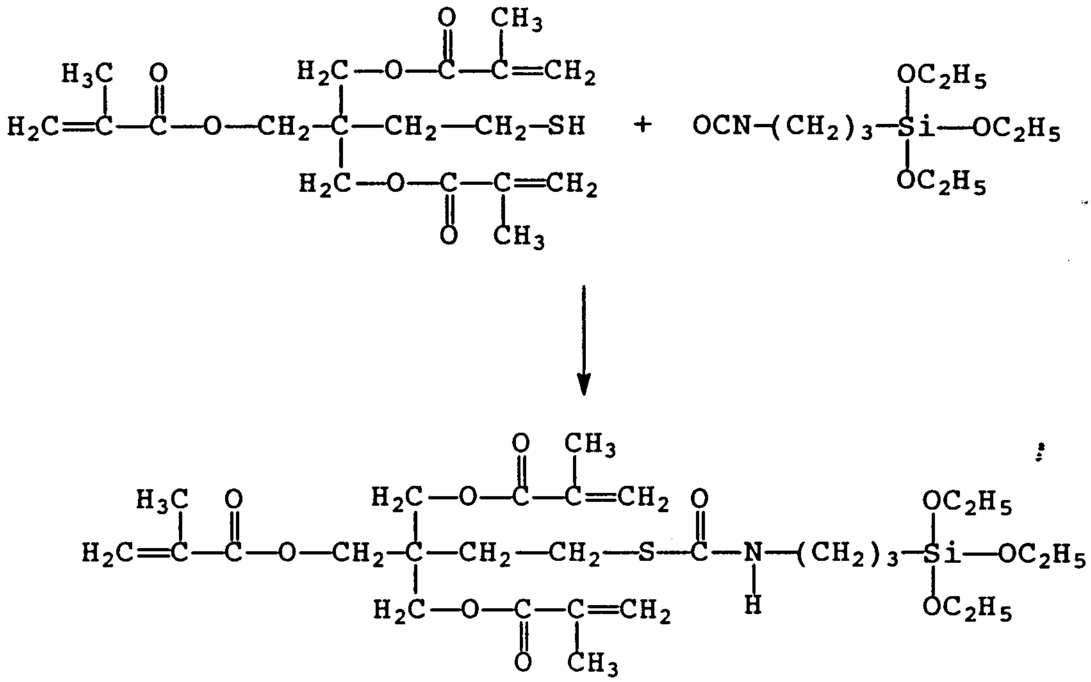

-A- = -S-, -Z- = -CO-, $R^1$ = N, $-R^2$ = -H, -R'- = $-(CH_2)_3-$, -X = $-OC_2H_5$, a= 3, b = 0, c = 1 und d = 1.

Analoge Umsetzungen sind für $B(AH)_c = B(SH)_c$ mit c = 1 - 4 möglich. Ganz allgemein gilt:

$$B(SH)_c + cOCN\text{-}R'\text{-}SiX_aR_b \Rightarrow B(S\text{-}CO\text{-}NH\text{-}R'\text{-}Si\ X_aR_b)_c$$

Bei allen 4 Reaktionstypen a) bis d) ist eine mehrfache, bis zu vierfache Addition der entsprechenden Silane an Verbindungen $B(AH)_c$, mit c = 2,3 oder 4, möglich.

Ohne Einschränkung der Allgemeinheit sind konkrete Beispiele für Reste $-R'-SiX_aR_b$ :

$-(CH_2)_n-Si(CH_3)_2(OC_2H_5)$, mit n = 0 bis 10
$-(CH_2)_n-Si(CH_3)(OC_2H_5)_2$, mit n = 0 bis 10
$-(CH_2)_n-Si(OC_2H_5)_3$, mit n = 0 bis 10
$-(CH_2)_n-Si(C_2H_5)_2(OCH_3)$, mit n = 0 bis 10
$-(CH_2)_n-Si(C_2H_5)(OCH_3)_2$, mit n = 0 bis 10
$-(CH_2)_n-Si(OCH_3)_3$, mit n = 0 bis 10
$-(CH_2)_n-Si(CH_3)_2(OCH_3)$, mit n = 0 bis 10
$-(CH_2)_n-Si(CH_3)(OCH_3)_2$, mit n = 0 bis 10
$-(CH_2)_n-Si(C_2H_5)_2(OC_2H_5)$, mit n = 0 bis 10
$-(CH_2)_n-Si(C_2H_5)(OC_2H_5)_2$, mit n = 0 bis 10
$-(CH_2)_n-Si(CH_3)(C_2H_5)(OCH_3)$, mit n = 0 bis 10
$-(CH_2)_n-Si(CH_3)(C_2H_5)(OC_2H_5)$, mit n = 0 bis 10
$-(CH_2)_n-Si(CH_3)(OC_2H_5)(OCH_3)$, mit n = 0 bis 10
$-(CH_2)_n-Si(C_2H_5)(OC_2H_5)(OCH_3)$, mit n = 0 bis 10
$-(CH_2)_n-Si(OC_2H_5)_2(OCH_3)$, mit n = 0 bis 10
$-(CH_2)_n-Si(OC_2H_5)(OCH_3)_2$, mit n = 0 bis 10
$-(CH_2)_n-Si(CH_3)(OC(CH_3)=CH_2)_2$, mit n = 0 bis 10
$-(CH_2)_n-Si(C_2H_5)(OC(CH_3)=CH_2)_2$, mit n = 0 bis 10

$-(CH_2)_n-Si(CH_3)_2(OC(CH_3)=CH_2)$, mit n = 0 bis 10
$-(CH_2)_n-Si(C_2H_5)_2(OC(CH_3)=CH_2)$, mit n = 0 bis 10
$-(CH_2)_n-Si(OCH_3)(OC(CH_3)=CH_2)_2$, mit n = 0 bis 10
$-(CH_2)_n-Si(OC_2H_5)(OC(CH_3)=CH_2)_2$, mit n = 0 bis 10
$-(CH_2)_n-Si(OCH_3)_2(OC(CH_3)=CH_2)$, mit n = 0 bis 10
$-(CH_2)_n-Si(OC_2H_5)_2(OC(CH_3)=CH_2)$, mit n = 0 bis 10
$-(CH_2)_n-Si(C_6H_5)(OC_2H_5)_2$, mit n = 0 bis 10
$-(CH_2)_n-Si(C_6H_5)(OCH_3)_2$, mit n = 0 bis 10
$-(CH_2)_n-Si(C_6H_5)(OCH_3)(OC_2H_5)$, mit n = 0 bis 10
$-(CH_2)_n-Si(C_6H_5)(OC(CH_3)=CH_2)_2$, mit n = 0 bis 10

Erfindungsgemäße Silane, die durch ein Herstellungsverfahren gemäß Typ a) erhalten werden, weisen in der Verbindungseinheit zwischen Siliciumatom und der Gruppierung B eine oder mehrere Carboxylgruppen ($-R^2$ = -COOH) auf. Diese Carboxylgruppen bewirken zum einen ganz bestimmte Moleküleigenschaften und ermöglichen zum anderen deren weitere Modifikation. So fungieren z.B. die Carboxylgruppen als Ladungsträger, was den Einsatz der erfindungsgemäßen Silane in Dispersionen bzw. Emulsionen oder in der Elektrotauchlackierung sehr vorteilhaft macht. Desweiteren bewirken die Carboxylgruppen eine saure Katalyse, z.B. während eines Sol-Gel-Prozesses, was den großen Vorteil mit sich bringt, daß ein späterer Abtrennungsschritt, nämlich die Abtrennung des Katalysators, entfällt. Ferner erhöhen die Carboxylgruppen die Wasserlöslichkeit der erfindungsgemäßen Silane, so daß diese als bzw. in Wasserlacken eingesetzt werden können. Außerdem dienen die Carboxylgruppen als haftvermittelnde Gruppen für anorganische und für organische Oberflächen. Desweiteren ist die Carboxylgruppe zur Komplexierung von Titan, Zirkonium, Zinn und weiteren Metallen befähigt, was sich besonders positiv auf die Röntgenopazität, die Kontakttoxizität und die Steigerung des Brechungsindex auswirkt. Ferner können die Carboxyl- und die Hydroxylgruppen (Typ c), $-R^2$ = -OH) zur weiteren Funktionalisierung durch Addition anderer organischer Moleküle, z.B. von RNCO oder RCOCl, genutzt werden.

Insbesondere durch die Kombination der Carboxylgruppe mit polymerisierbaren C=C-Doppelbindungen, mit einem Silanteil und der Einbindungsmöglichkeit von z.B. Zirkonium (Röntgenopazität) in einem Molekül bietet sich der Einsatz im Dentalbereich, z.B. als Haftvermittler, an. Verstärken läßt sich die haftvermittelnde Wirkung noch durch die Kombination mit einem Anhydridsilan.

Die Kombination der Carboxylgruppe mit polymerisierbaren C=C-Doppelbindungen in Verbindung mit dem anorganischen Silanteil stellt eine ideale Verbindung dar zum Einsatz als Polyalkensäuren in Ionomerzementen.

Wird bei der Herstellung gemäß Typ a) ein Aminoolefin ($B(NH_2)_c$) eingesetzt, kann die Carboxylgruppe während einer thermischen Härtung (Polymerisation der C=C-Doppelbindungen) mit der Amidgruppe zu einer Imidstruktur reagieren und verschwinden. Dies hat zum einen zur Folge, daß neben der Doppelbindungspolymerisation ein weiterer Härtungsmechanismus bei intermolekularer Reaktion zur Verfügung steht, und daß zum anderen die im gehärteten Zustand für bestimmte Anwendungen störende Carboxylgruppe eliminiert wird. Bei anderen, nicht aminhaltigen Systemen ist dazu ein amid- bzw. aminhaltiger Zusatz erforderlich.

Die erfindungsgemäßen Silane sind stabile Verbindungen, und können entweder alleine oder zusammen mit anderen hydrolysierbaren, kondensierbaren und/oder polymerisierbaren Komponenten zu Kieselsäurepolykondensaten oder zu Kieselsäureheteropolykondensaten verarbeitet werden, deren endgültige Härtung dann durch Polymerisation der C=C-Doppelbindungen erfolgt. Die erfindungsgemäßen Silane können aber auch alleine oder zusammen mit anderen hydrolysierbaren, kondensierbaren und/oder polymerisierbaren Komponenten zu Polymerisaten verarbeitet werden, die durch anschließende hydrolytische Kondensation verfestigt werden können.

Kieselsäure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozeß) sind in großer Zahl bekannt. Derartige Kondensate finden, wie eingangs schon erwähnt, für die verschiedensten Zwecke Verwendung, z.B. als Formmassen, als Lacke für Überzüge, etc. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiet zu erschließen und zum anderen, um deren Eigenschaften für bestimmte Verwendungszwecke noch weiter zu optimieren.

Die erfindungsgemäßen Silane sind im basischen oder sauren Milieu hydrolysier- und kondensierbar, ohne daß dadurch eine Verknüpfung der C=C-Doppelbindungen erfolgt. Dadurch ist es möglich, die erfindungsgemäßen Silane durch hydrolytische Kondensation in ein anorganisch-organisches Netzwerk einzubauen. Die erfindungsgemäßen Silane enthalten hydrolysierbare Gruppen X, z.B. Alkoxygruppen, so daß damit ein anorganisches Netzwerk (Si-O-Si-Einheiten) aufgebaut werden kann, während die im Rest B enthaltenen C=C-Doppelbindungen unter Aufbau eines organischen Netzwerkes polymerisiert werden können. Dadurch ist es möglich, organisch modifizierte, hydrolysier- und kondensierbare Silane in Beschichtungs-, Füll-, Klebe- und Dichtungsmassen, in Formkörpern und Einbettmassen nach dem Stand der Technik durch die erfindungsgemäßen Silane zu ersetzen.

Zum Aufbau des anorganischen Netzwerkes werden die erfindungsgemäßen Silane, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die erfindungsgemäßen Silane gegebenenfalls unter Zusatz anderer copolymerisierbarer Komponenten polymerisiert. Die Polymerisation kann z.B. thermisch, redoxinduziert, kovalent-nucleophil und/oder photochemisch unter Einsatz von Methoden erfolgen, wie sie z.B. in den DE-A1 3143820, 3826715 und 3835968 beschrieben sind.

Als weitere polymerisierbare Komponenten können Verbindungen zugesetzt werden, die radikalisch und/oder ionisch polymerisierbar sind. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie z.B. Spiroorthoester, Spiroorthocarbonate, bicyclische Spiroorthoester, Mono- oder Oligoepoxide oder Spiro-Silane, wie sie aus der DE 4125201 C1 bekannt sind. Es können aber auch Verbindungen zugesetzt werden, die sowohl ionisch als auch radikalisch polymerisierbar sind, wie z.B. Methacryloyl-Spiroorthoester. Diese sind radikalisch über die C=C-Doppelbindung und kationisch unter Ringöffnung polymerisierbar. Die Herstellung dieser Systeme ist z.B. im Journal f. prakt. Chemie, Band 330, Heft2, 1988, S. 316-318, beschrieben. Desweiteren können die erfindungsgemäßen Silane in Systemen eingesetzt werden, wie sie z.B. in der DE 4405261 beschrieben sind.

Ferner ist es möglich, andere bekannte, silan-gebundene cyclische Systeme zuzusetzen, die mit einpolymerisiert werden können. Solche Systeme sind z.B. solche, die Epoxide enthalten. Solche Systeme sind bei der Herstellung der Spiro-Silane der DE 4125201 C1 beschrieben.

Die erfindungsgemäßen Silane stellen hoch reaktive Systeme dar, die zu Poly(hetero)kondensaten führen, die z.B. bei UV-Bestrahlung innerhalb kürzester Zeit zu mechanisch stabilen Überzügen oder Form- bzw. Füllkörpern führen. Die erfindungsgemäßen Silane sind über einfache Additionsreaktionen herstellbar und können durch geeignete Auswahl der Ausgangsverbindungen eine variierbare Anzahl reaktiver Gruppen unterschiedlicher Funktionalität aufweisen.

Bei Anwesenheit von zwei oder mehr C=C-Doppelbindungen im Rest B ist die Ausbildung eines dreidimensionalen, organischen Netzwerkes möglich. Über den Abstand zwischen dem Si-Atom und dem Rest B , d.h. über die Kettenlänge, und über die Anwesenheit weiterer funktioneller Gruppen in dieser Kette, können die mechanischen Eigenschaften (z.B. Flexibilität) und die physikalisch-chemischen Eigenschaften (Adsorption, Brechzahl, Haftung etc.) der Poly(hetero)kondensate beeinflußt werden. Durch die Ausbildung eines anorganischen Netzwerkes können je nach Art und Anzahl der hydrolysierbaren Gruppen (z.B. Alkoxygruppen) silicon- oder glasartige Eigenschaften der Poly(hetero)kondensate eingestellt werden.

Die erfindungsgemäßen Silane besitzen relativ hohe Molekulargewichte und dementsprechend eine verminderte Flüchtigkeit gegenüber den eingangs erwähnten (Meth)Acrylatmonomeren, so daß die toxische Gefährdung während der Verarbeitung und Applikation geringer ist. Bei der anorganischen und/oder organischen Vernetzung bilden sich Polysiloxane mit nochmals erniedrigter Flüchtigkeit, die damit das Toxizitätsproblem der Acrylatkomponenten völlig beheben.

Berücksichtigt man dann noch die Variationsmöglichkeiten der cokondensierbaren und copolymerisierbaren Komponenten, so wird offenbar, daß über die erfindungsgemäßen Silane Kieselsäure(hetero)polykondensate zur Verfügung gestellt werden, die in vielfältiger Weise an vorgegebene Einsatzgebiete angepaßt werden können, und die deshalb auf allen Gebieten, auf denen bereits bisher Kieselsäure (hetero)polykondensate eingesetzt werden, Verwendung finden können, aber auch neue Verwendungsmöglichkeiten eröffnen, z.B. auf dem Gebiet der Optik, der Elektronik, der Medizin, der Optoelektronik und der Verpackungsmittel für Lebensmittel etc.

Die erfindungsgemäßen Silane können entweder als solche verwendet werden oder in Zusammensetzungen, die zusätzlich an den Verwendungszweck angepaßte Additive enthalten, z.B. übliche Lackadditive, Lösungsmittel, Füllstoffe, Photoinitiatoren, thermische Initiatoren, Verlaufsmittel und Pigmente. Die erfindungsgemäßen Silane oder die silanhaltigen Zusammensetzungen eignen sich z.B. zur Herstellung von Beschichtungs-, Füllstoff- oder Bulkmaterialien, von Klebstoffen und Spritzgußmassen, von Fasern, Partikeln, Folien, Haftvermittlern, von Abformmassen und von Einbettmaterialien. Beschichtungen und Formkörper aus den erfindungsgemäßen Silanen haben den Vorteil, daß sie photochemisch strukturierbar sind. Spezielle Anwendungsgebiet sind z.B. die Beschichtung von Substraten aus Metall, Kunststoff, Papier, Keramik etc. durch Tauchen, Gießen, Streichen, Spritzen, elektrostatisches Spritzen, Elektrotauchlackierung etc., der Einsatz für optische, optoelektrische oder elektronische Komponenten, die Herstellung von Füllstoffen, die Herstellung von kratzfesten, abriebfesten Korrosionsschutzbeschichtungen, die Herstellung von Formkörpern, z.B. durch Spritzguß, Formgießen, Pressen, Rapid-Prototyping oder Extrusion, und die Herstellung von Compositen, z.B. mit Fasern, Füllstoffen oder Geweben.

Neben den erfindungsgemäßen Silanen der Formel I können noch weitere hydrolytisch kondensierbare Verbindungen des Siliciums, des Bors, des Aluminiums, des Phosphors, des Zinns, des Bleis, der Übergangsmetalle, der Lanthaniden oder Actiniden eingesetzt werden. Diese Verbindungen können entweder als solche oder bereits in vorkondensierter Form zur Herstellung der Polykondensate herangezogen werden. Bevorzugt ist es, wenn mindestens 10 Mol-%, insbesondere mindestens 80 Mol-% und speziell mindestens 90 Mol-%, auf der Basis momomerer Verbindungen, der zu Herstellung der Kieselsäure(hetero)polykondensate herangezogenen Ausgangsmaterialien Siliciumverbindungen sind.

Ebenso ist es bevorzugt, wenn den Kieselsäure(hetero)polykondensaten mindestens 5 Mol-%, z.B. 25 bis 100 Mol-%, insbesondere 50 bis 100 Mol-% und speziell 75 bis 100 Mol-%, jeweils auf der Basis monomerer Verbindungen, an einem oder mehreren der erfindungsgemäßen Silane zugrundeliegen.

Unter den von Silanen der allgemeinen Formel I verschiedenen, hydrolytisch kondensierbaren Siliciumverbindungen, die gegebenenfalls eingesetzt werden können, sind solche der allgemeinen Formel VI besonders bevorzugt,

$$R_a(R''Z')_bSiX_{4-(a+b)} \qquad \text{(VI)}$$

in der die Reste R,R'', X und Z' gleich oder verschieden sind und folgende Bedeutung haben:

R = Alkyl, Alkenyl, Aryl, Alkylaryl oder Arylalkyl,
R'' = Alkylen oder Alkenylen, wobei diese Reste durch Sauerstoff- oder Schwefelatome oder - NH-Gruppen unterbrochen sein können,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, oder 3,
b = 0, 1, 2, oder 3, mit a+b = 1, 2 oder 3 .

Solche Silane sind z.B. in der DE 34 07 087 C2 beschrieben. Die Alkylreste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und ArylrResten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Spezielle Beispiele für hydrolytisch kondensierbare Silane der allgemeinen Formel VI sind:

$CH_3$-Si-$Cl_3$, $CH_3$-Si-$(OC_2H_5)_3$, $C_2H_5$-Si-$Cl_3$, $C_2H_5$-Si-$(OC_2H_5)_3$, $CH_2$=CH-Si-$(OC_2H_5)_3$, $CH_2$=CH-Si-$(OC_2H_4OCH_3)_3$, $(CH_3)_2$-Si-$Cl_2$, $CH_2$=CH-Si-$(OOCCH_3)_3$, $(CH_3)_2$-Si-$(OC_2H_5)_2$, $(C_2H_5)_3$-Si-Cl, $(C_2H_5)_2$-Si-$(OC_2H_5)_2$, $(CH_3)_2(CH_2$=CH)-Si-$Cl_2$, $(CH_3)_3$-Si-Cl, $(t\text{-}C_4H_9)(CH_3)_2$-Si-Cl, $(CH_3O)_3$-Si-$C_3H_6$-NH-$C_2H_4$-NH-$C_2H_4$-$NH_2$, $(CH_3O)_3$-Si-$C_3H_6$-SH, $(CH_3O)_3$-Si-$C_3H_6$-NH-$C_2H_4$-$NH_2$, $(CH_3O)_3$-Si-$C_3H_6$-Cl, $(CH_3O)_3$-Si-$C_3H_6$-O-C(O)-$C(CH_3)$=$CH_2$, $(CH_3)_2(CH_2$=CH-$CH_2)$-Si-Cl, $(C_2H_5O)_3$-Si-$C_3H_6$-$NH_2$, $(C_2H_5O)_3$-Si-$C_3H_6$-CN,

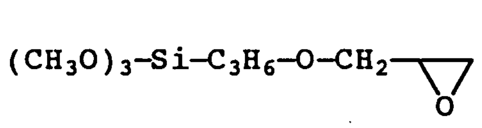

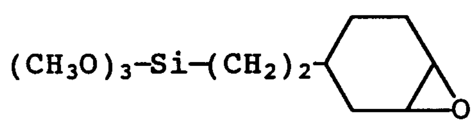

Unter den von Silanen der allgemeinen Formel I verschiedenen, hydrolytisch kondensierbaren Siliciumverbindungen, die gegebenenfalls noch eingesetzt werden können, sind solche der allgemeinen Formel VII ebenfalls bevorzugt,

$$\{X_nR_kSi[(R^2A)_l]_{4-(n+k)}\}_xB \qquad (VII)$$

in der die Reste A, R, $R^2$ und X gleich oder verschieden sind und folgende Bedeutung haben.

- A = O, S, PR', POR', NHC(O)O oder NHC(O)NR', mit R' = Wasserstoff, Alkyl oder Aryl,
- B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl,
- R = Alkyl, Alkenyl, Aryl, Alkylaryl oder Arylalkyl,
- $R^2$ = Alkylen, Arylen oder Alkylenarylen,
- X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
- n = 1, 2 oder 3,
- k = 0, 1 oder 2,
- l = 0 oder 1,
- x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR' steht.

Solche Silane sind in der DE 40 11 044 und in der EP 91 105 355 beschrieben.

Die Alkylreste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Der Rest B leitet sich von einer substituierten oder unsubstituierten Verbindung B' mit mindestens zwei C=C-Doppelbindungen ab, z.B. Vinyl-, Allyl-, Acryl- und/oder Methacrylatgruppen, und 5 bis 50, vorzugsweise 6 bis 30 Kohlenstoffatomen. Vorzugsweise leitet sich B ab, von einer substituierten oder unsubstituierten Verbindung B' mit zwei oder mehreren Acrylat- oder Methacrylatgruppen (derartige Verbindungen werden im folgenden als (Meth)Acrylate bezeichnet).

Falls die Verbindung B' substituiert ist, können die Substituenten unter den oben genannten Substituenten ausgewählt sein.

Die erfindungsgemäßen Silane müssen für die Weiterverarbeitung zu den Poly(hetero)kondensaten nicht unbedingt extra isoliert werden. Es ist auch möglich, in einem Eintopf-Verfahren, diese Silane zunächst herzustellen und dann - gegebenenfalls nach Zusatz weiterer hydrolysierbarer Verbindungen - hydrolytisch zu kondensieren.

Unter den von Silanen der allgemeinen Formel I verschiedenen, hydrolytisch kondensierbaren Siliciumverbindungen, die gegebenenfalls noch eingesetzt werden können, sind solche der allgemeinen Formel VIII ebenfalls besonders bevorzugt,

$$Y_nSiX_mR_{4-(n+m)} \qquad (VIII)$$

in der die Reste X, Y und R gleich oder verschieden sind und folgende Bedeutung haben:

R = Alkyl, Alkenyl, Aryl, Alkylaryl oder Arylalkyl,

X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,

Y = ein Substituent, der einen substituierten oder unsubstituierten 1,4,6-Trioxaspiro-[4,4]-nonanrest enthält,

n = 1, 2 oder 3,

m = 1, 2 oder 3, mit $n+m \leq 4$ .

Diese Spiro-Silane sind über die Reste X hydrolysierbar und über die Reste Y polymerisierbar und sie sind in der DE 4125201 C1 ausführlichst beschrieben.

Die Alkylreste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Unter den gegebenenfalls eingesetzten hydrolysierbaren Aluminiumverbindungen sind diejenigen besonders bevorzugt, die die allgemeine Formel $AlR°_3$ aufweisen, in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind Aluminiumalkoxide und -halogenide. In diesem Zusammenhang können als konkrete Beispiele genannt werden

$Al(OCH_3)_3$, $Al(OC_2H_5)_3$, $Al(O\text{-}n\text{-}C_3H_7)_3$, $Al(O\text{-}i\text{-}C_3H_7)_3$, $Al(OC_4H_9)_3$, $Al(O\text{-}i\text{-}C_4H_9)_3$, $Al(O\text{-}s\text{-}C_4H_9)_3$, $AlCl_3$, $AlCl(OH)_2$.

Bei Raumtemperatur flüssige Verbindungen, wie z.B. Aluminiumsek-butylat und Aluminium-isopropylat, werden besonders bevorzugt.

Geeignete hydrolysierbare Titan- oder Zirkoniumverbindungen, die gegebenenfalls eingesetzt werden können, sind solche der allgemeinen Formel $M\ X_yR_z$, in der M Ti oder Zr bedeutet, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind. Dies gilt auch für die bevorzugten Bedeutungen. Besonders bevorzugt ist es, wenn y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure, wobei erfindungsgemäße Silane, die Acryl- bzw. Methacrylgruppen aufweisen, ebenfalls zur Komplexierung verwendet werden können. In diesem Fall besteht der große Vorteil der erfindungsgemäßen Silane darin, daß zur Komplexierung von Ti- und/oder Zr-Verbindungen keine zusätzlichen Komplexierungsmittel eingesetzt werden müssen.

Konkrete Beispiele für einsetzbare Zr- und Ti-Verbindungen sind die folgenden:

$TiCl_4$, $Ti(OC_2H_5)_4$, $Ti(OC_3H_7)_4$, $Ti(O\text{-}i\text{-}C_3H_7)_4$, $Ti(OC_4H_9)_4$, $Ti(2\text{-}ethylhexoxy)_4$, $ZrCl_4$, $Zr(OC_2H_5)_4$, $Zr(OC_3H_7)_4$, $Zr(O\text{-}i\text{-}C_3H_7)_4$, $Zr(OC_4H_9)_4$, $Zr(2\text{-}ethylhexoxy)_4$, $ZrOCl_2$

Weitere hydrolysierbare Verbindungen, die zur Herstellung der Polyheterokondensate eingesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadylverbindungen, wie z.B. $VOCl_3$ und $VO(OCH_3)_3$.

Wie bereits erwähnt, kann die Herstellung der Poly(hetero)kondensate in auf diesem Gebiet üblicher Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen von Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Werden Spiro-Silane zur Herstellung der Poly(hetero)kondensate eingesetzt, so wird die Hydrolyse bevorzugt in einem bzgl. der Spiro-Silane basischen Milieu durchgeführt. Dies wird entweder durch ein basisches Lösungsmittel, wie z.B. durch Triethylamin, erzeugt, oder durch Zugabe von basichen Hydrolyse- und Kondensationskatalysatoren, wie z.B. von $NH_3$, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von Siliciumverbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Poly(hetero)kondensat kann entweder als solches oder nach teilweiser oder nahezu vollständiger Entfernung des verwendeten Lösungsmittels weiterverarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Poly(hetero)kondensat zu stabilisieren. Zu diesem Zweck kann die Reaktionsmischung z.B. im Vakuum bei leicht erhöhter Temperatur so weit eingedickt werden, daß sie noch problemlos mit einem anderen Lösungsmittel aufgenommen werden kann.

Sollen diese Poly(hetero)kondensate als Lacke für die Beschichtung (z.B. von Kunststoffen wie etwa PVC, PC, PMMA, PE, PS etc., von Glas, Papier, Holz, Keramik, Metall usw.) eingesetzt werden, so können diesen spätestens vor der Verwendung gegebenenfalls noch übliche Lackadditive zugegeben werden, wie z.B. Färbemittel (Pigmente oder Farbstoffe), Füllstoffe, Oxidationsinhibitoren, Flammschutzmittel, Verlaufsmittel, UV-Absorber, Stabilisatoren oder dergleichen. Auch Zusätze zur Erhöhung der Leitfähigkeit (z.B. Graphit-Pulver, Silber-Pulver etc.) verdienen in diesem Zusammenhang Erwähnung. Im Falle der Verwendung als Formmasse kommt insbesondere die Zugabe von anorganischen und/oder organischen Füllstoffen in Frage, wie z.B. organische und anorganische Partikel, (Glas)Fasern, Mineralien etc.

Die endgültige Härtung der Poly(hetero)kondensate erfolgt nach Zugabe geeigneter Initiatoren thermisch, redox-induziert, kovalent-nucleophil oder photochemisch, wobei auch mehrere Härtungsmechanismen parallel und/oder nacheinander ablaufen können. Dabei werden im Zuge der Polymerisation die C=C-Doppelbindungen verknüpft und es wird das organische Netzwerk aufgebaut. Aufgrund der relativ hohen Molekulargewichte der erfindungsgemäßen Silane erfahren diese bei der Härtung nur eine geringe Volumenschrumpfung.

Es ist auch möglich, dem Poly(hetero)kondensat vor der endgültigen Härtung, also vor der Polymerisation weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen verläuft. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide oder Spirosilane der allgemeinen Formel VIII. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung des Poly(hetero)kondensates photochemisch, so werden diesem Photoinitiatoren zugesetzt, bei thermischer Härtung thermische Initiatoren und bei redox-induzierter Härtung Starter-Aktivator-Systeme.

Der Initiator kann in üblichen Mengen zugegeben werden. So kann z.B. einer Mischung, die 30 bis 50 Gew.-% Feststoff (Polykondensat) enthält, Initiatoren in einer Menge von z.B. 0.5 bis 5 Gew.-%, insbesondere von 1 bis 3 Gew.-%, bezogen auf die Mischung zugesetzt, werden.

Werden zur Herstellung der Poly(hetero)kondensate neben den erfindungsgemäßen Silanen weitere Komponenten eingesetzt, die reaktive Doppelbindungen enthalten, wie z.B. Silane gemäß der allgemeinen Formel VII, so kann über diese Doppelbindungen ebenfalls eine Polymerisation ablaufen, die thermisch und/oder photochemisch und/oder kovalent-nucleophil und/oder redox initiiert sein kann.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Benzophenon), und andere von Ciba-Geigy erhältliche Photoinitiatoren vom Irgacure-Typ; Darocure 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4.4'-Dimethoxybenzoin etc. Erfolgt folgt die Härtung mit sichtbaren Licht, wie z.B. im Dentalbereich, so kann als Initiator z.B. Campherchinon eingesetzt werden.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Als Starter/Aktivator-Systeme können hierfür übliche eingesetzt werden, wie z.B. aromatische Amine (z.B. N,N-Bis-(2-hydroxy-ethyl)-p-toluidin) als Aktivatoren oder als Starter z.B. Dibenzoylperoxid, wobei über deren Konzatration bzw. deren Konzentrationsverhältnis die Härtungszeit entsprechend dem jeweiligen Anwendungsfall eingestellt werden kann. Weitere Amine sind z.B. der DE 4310733 zu entnehmen.

Bei kovalent-nucleophiler Härtung werden als Initiatoren z.B. Verbindungen mit mindestens einer Aminogruppe zugesetzt. Geeignete Amine sind z.B. der DE 4405261 zu entnehmen.

Ein mit einem Initiator versehener Lack (Poly(hetero)kondensat) auf der Basis der erfindungsgemäßen Silane kann dann für Beschichtungen von Substraten eingesetzt werden. Für diese Beschichtung können übliche Beschichtungsverfahren angewendet werden, z.B. Tauchen, Fluten, Gießen, Schleudern, Walzen, Spritzen, Aufstreichen, elektrostatisches Spritzen und Elektrotauchlackierung. Erwähnt werden soll hier noch, daß der Lack nicht notwendigerweise lösungsmittelhaltig sein muß. Insbesondere bei Verwendung von Ausgangssubstanzen (Silanen) mit zwei Alkoxygruppen am Si-Atom kann auch ohne Zusatz von Lösungsmitteln gearbeitet werden.

Vor der Härtung läßt man vorzugsweise den aufgetragenen Lack abtrocknen. Danach kann er, abhängig von der Art des Initiators, redox-induziert, thermisch oder photochemisch in an sich bekannter Weise gehärtet werden. Selbstverständlich sind auch Kombinationen von Aushärtungsmethoden möglich.

Erfolgt die Härtung des aufgetragenen Lackes durch Bestrahlen kann es sich von Vorteil erweisen, nach der Strahlungshärtung eine thermische Härtung durchzuführen, insbesondere um noch vorhandenes Lösungsmittel zu entfernen oder um noch weitere reaktive Gruppen in die Härtung miteinzubeziehen.

Obwohl in den Poly(hetero)kondensaten auf der Basis der erfindungsgemäßen Silane bereits polymerisierbare Gruppen vorhanden sind, kann es sich in bestimmten Fällen als vorteilhaft erweisen, diesen Kondensaten vor oder bei ihrer Weiterverarbeitung (Härtung) noch weitere Verbindungen (vorzugsweise rein organischer Natur) mit z.B. ungesättigten Gruppen zuzugeben. Bevorzugte Beispiele für derartige Verbindungen sind Acrylsäure und Methacrylsäure sowie davon abgeleitete Verbindungen, insbesondere Ester von vorzugsweise einwertigen Alkoholen (z.B. $C_{1-4}$-Alkanolen), (Meth)Acrylnitril, Styrol und Mischungen derselben. Im Fall der Verwendung der Poly(hetero)kondensate zur Herstellung von Beschichtungslacken können derartige Verbindungen gleichzeitig als Lösungs- bzw. Verdünnungsmittel wirken.

Die Herstellung von Formkörpern bzw. Formmassen aus Poly(hetero)kondensaten auf der Basis der erfindungsgemäßen Silane kann mit jeder auf diesem Gebiet gebräuchlichen Methode erfolgen, z.B. durch Pressen, Spritzguß, Formgießen, Extrusion etc. Auch zur Herstellung von Kompositmaterialien (z.B. mit Glasfaserverstärkung) sind die Poly(hetero)kondensate auf der Basis der erfindungsgemäßen Silane geeignet.

Eine weitere Anwendungsmöglichkeit finden die erfindungsgemäßen Silane bei der Herstellung von hydrolytisch kondensierbaren Polymerisaten. Dazu werden die erfindungsgemäßen Silane alleine oder zusammen mit anderen radikalisch und/oder ionisch polymerisierbaren Komponenten polymerisiert, wobei die endgültige Härtung dann durch hydrolytische Kondensation über die hydrolysierbaren Gruppen der erfindungsgemäßen Silane und eventuell weiterer, hydrolysierbarer Komponenten erfolgt. In diesem Fall wird zuerst durch Polymerisation das organische Netzwerk aufgebaut und dann durch hydrolytische Kondensation das anorganische.

Die Herstellung der Polymerisate erfolgt durch radikalische und/oder ionische Polymerisation einer oder mehrerer C=C-Doppelbindungen-haltiger Verbindungen und gegebenenfalls anderer, radikalisch und/oder ionisch polymerisierbarer Verbindungen redox-induziert und/oder kovalent-nucleophil und/oder durch Einwirkung von Wärme und/oder von elektromagnetischer Strahlung, gegebenenfalls in Anwesenheit eines oder mehrerer Initiatoren und/oder eines Lösungsmittels, und ist dadurch gekennzeichnet, daß 5 bis 100 Molprozent, auf der Basis mono-merer Verbindungen, der C=C-Doppelbindungen-haltigen Verbindungen aus den erfindungsgemäßen Silanen der allgemeinen Formel (I) ausgewählt werden.

Es ist aber auch möglich, den erfindungsgemäßen Silanen vor der Polymerisation weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide oder Spiro-Silane der allgemeinen Formel VIII. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Ferner können den erfindungsgemäßen Silanen vor der Polymerisation weitere hydrolysierbare und polymerisierbare Verbindungen des Siliciums zugesetzt werden, gegebenenfalls in vorkondensierter Form, die dann mit einpolymerisiert werden. Solche Siliciumverbindungen leiten sich z.B. von Epoxid-haltigen Silanen ab, sind deshalb kationisch polymerisierbar und werden u.a. für die Herstellung der Spiro-Silane gemäß der DE 4125201 C1 eingesetzt. Diese Systeme sind in der DE 4125201 C1 beschrieben.

Es können aber auch Siliciumverbindungen eingesetzt werden, die sich z.B. von solchen der allgemeinen Formel VII ableiten und radikalisch polymerisierbar sind. Diese Systeme sind bei der Herstellung der Poly(hetero)kondensate bereits näher beschrieben worden.

Die Polymerisation erfolgt kovalent-nucleophil und/oder redox-induziert und/oder thermisch und/oder photochemisch nach Zugabe geeigneter Initiatoren. Dabei werden z.B. im Zuge einer radikalischen Polymerisation C=C-Doppelbindungen verknüpft und gegebenenfalls im Zuge einer kationischen Polymerisation Ringe von Spirogruppen und gegebenenfalls weitere radikalisch polymerisierbare Ringe geöffnet. Dadurch wird das organische Netzwerk aufgebaut. Überraschenderweise wurde festgestellt, daß sich im Laufe dieser Polymerisation das Volumen der Reaktionsmasse nicht oder nur geringfügig ändert.

Verantwortlich dafür ist das relativ hohe Molekulargewicht der erfindungsgemäßen Silane.

Erfolgt die Polymerisation photochemisch, so werden der Reaktionsmasse Photoinitiatoren zugesetzt, erfolgt die Polymerisation thermisch, so werden thermische Initiatoren zugesetzt und bei redox-induzierter Polymerisation Starter/Aktivator-Systeme.

Wurden den erfindungsgemäßen Silanen Komponenten mit Spirogruppen zugesetzt, so kann über diese ebenfalls eine Polymerisation ablaufen, die thermisch oder photochemisch initiierbar ist. Als Photoinitiatoren hierfür können z.B. die im Handel erhältlichen eingesetzt werden.

Der Initiator kann in üblichen Mengen zugegeben werden. So kann z.B. einer Mischung, die 30 bis 50 Gew.-% Feststoff (Polykondensat) enthält, Initiator in einer Menge von z.B. 0.5 bis 5 Gew.-%, insbesondere von 1 bis 3 Gew.-%, bezogen auf die Mischung zugesetzt, werden.

Das auf diese Weise erhaltene Polymerisat kann man nun zum Aufbau des anorganischen Netzwerkes, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensieren. Die Polymerisate enthalten hydrolysierbare Gruppen X, z.B. Alkoxygruppen, so daß damit ein anorganisches Netzwerk (Si-O-Si-Einheiten) aufgebaut werden kann.

Unter den gegebenenfalls eingesetzten hydrolysierbaren Verbindungen des Siliciums sind solche der allgemeinen Formel VI, gegebenenfalls in vorkondensierter Form, bevorzugt. Diese Systeme wurden bereits bei der Herstellung der Poly(hetero)kondensate ausführlich beschrieben und mit konkreten Beispielen belegt.

Unter den gegebenenfalls eingesetzten hydrolysierbaren Aluminiumverbindungen sind diejenigen besonders bevorzugt, die die allgemeine Formel $AlR°_3$ aufweisen, und geeignete hydrolysierbare Titan- oder Zirkoniumverbindungen, die gegebenenfalls eingesetzt werden können, sind solche der allgemeinen Formel $MX_yR_z$. Auch diese Systeme wurden bereits bei der Herstellung der Poly(hetero)kondensate ausführlich abgehandelt.

Weitere hydrolysierbare Verbindungen, die dem Polymerisat zugesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadylverbindungen, wie z.B. $VOCl_3$ und $VO(OCH_3)_3$.

Auch hier kann, wie bereits erwähnt, die hydrolytische Kondensation in auf diesem Gebiet üblicher Art und Weise erfolgen. Die hydrolytische Kondensation kann in den meisten Fällen dadurch erfolgen, daß man dem zu hydrolysierenden Polymerisat, das entweder als solches oder gelöst in einem geeigneten Lösungsmittel vorliegt, das erforderliche Wasser bei Raumtemperatur oder unter leichter Kühlung direkt zugibt, vorzugsweise unter Rühren und in Anwesenheit eines Hydrolyse- und Kondensationskatalysators.

Bei Anwesenheit reaktiver Verbindungen von Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. das gelöste Polymerisat langsam zu einem Überschuß an Wasser tropfen oder man gibt Wasser in einer Portion oder portionsweise dem gegebenenfalls gelösten Polymerisat zu. Es kann auch nützlich sein, das Wasser nicht als solches zuzugeben, sondern mit Hilfe von wasserhaltigen organischen oder anorganischen Systemen in das Reaktionssystem einzutragen.

Mit den erfindungsgemäßen, mehrfach funktionellen Silanen stehen Ausgangsverbindungen zur Verfügung, die die Herstellung von anorganisch-organischen Verbundpolymeren mit den unterschiedlichsten und in weiten Bereichen einstellbaren Eigenschaften bzw. die Modifikation von bestehenden Verbundpolymeren ermöglichen. Der Einsatz solcher Materialien erstreckt sich auf die verschiedensten Zwecke und unter anderem auf die Verwendung als Bulkmaterialien, Komposite, Klebstoffe, Vergußmassen, Beschichtungsmaterialien, Haftvermittler und Bindemittel für keramische Partikel (keramische Formgebungsverfahren), zur Herstellung bzw. Primung von Füllstoffen und Fasern, von Schleifscheiben, als Einsatz im Reaktionsextruder etc.. Für die organische Polymerisation kommt die photochemisch, die thermisch sowie die chemisch (2-Komponenten, anaerob, Redox, etc.) induzierte Umsetzung in Frage. Die Kombination von Selbsthärtung mit z.B. photoinduzierter bzw. thermischer Härtung ist ebenfalls möglich.

An Hand von Ausführungsbeispielen wird die Erfindung näher erläutert.

<u>Beispiel 1:</u>

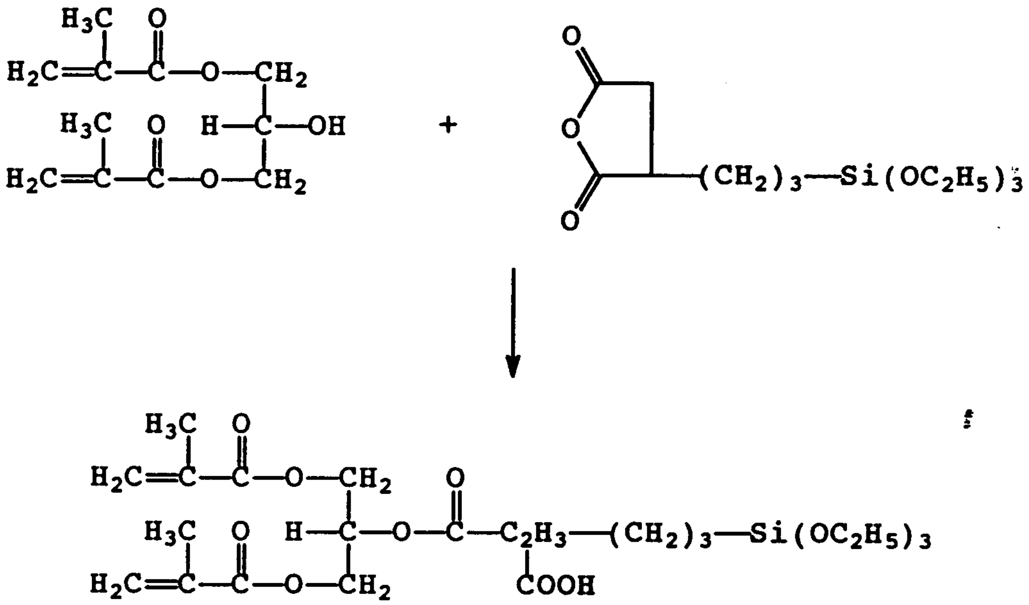

Zur Vorlage von 12.7 g (0.05 mol) Glycerin-1.3-dimethacrylat werden unter trockener Atmosphäre 17.0 g (0.05 mol) Triethoxysilylpropylbernsteinsäureanhydrid zugetropft. Die Umsetzung kann über die Abnahme der Anhy-

drid-Carbonylbande ($\nu_{as(C=O)}$ = 1786 cm $^{-1}$, $\nu_{sy(C=O)}$ = 1864 cm-1) verfolgt werden. Da ein Katalysator bzw. Lösungsmittel nicht zugesetzt werden muß, wird nach vollständiger Reaktion das gewünschte Produkt (flüssig) erhalten und kann ohne Reinigung für weitere Umsetzungen verwendet werden.

| | | |
|---|---|---|
| IR-Daten : | $\nu_{(OH \leftrightarrow COOH)}$<br>$\nu_{(C=O \leftrightarrow Methacryl/Ester/COOH)}$<br>$\nu_{(C=C \leftrightarrow Methacryl)}$ | = 3450 - 2500 $cm^{-1}$<br>= 1726 $cm^{-1}$<br>= 1638 $cm^{-1}$ |

Beispiel 2 :

Hydrolyse und Kondensation des Produktes von Beispiel 1

Die Lösung von 53.5 g (0.1 mol) Produkt aus Beispiel 1 in 100 ml Essigester wird zur Hydrolyse und Kondensation der Ethoxygruppen mit 4.4 g Wasser (Eigenkatalyse durch die Säurefunktion bzw. mit zugesetztem Katalysator) versetzt und gerührt. Nach vollständigem Umsatz (Nachweis über $H_2O$-Titration) kann die resultierende Lösung z.B. zum Beschichten (mit anschließender Härtung d.h. Polymerisation der Methacrylgruppen) von beliebigen Substraten verwendet werden.

Beispiel 3 :

Komplexierung von Zr(OPr)4 mit der Carboxylgruppe des Produktes von Beispiel 1

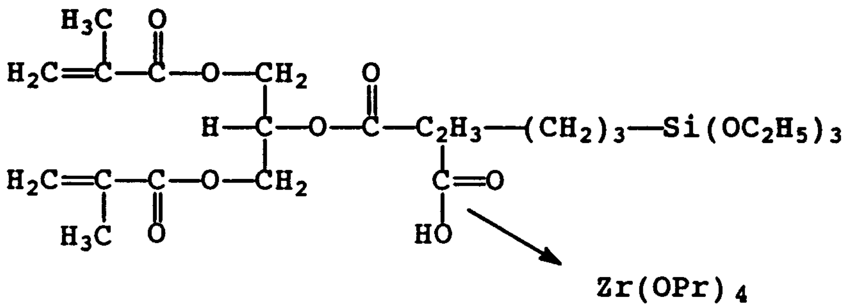

Zur Vorlage von 16.0 g (37.5 mmol) Zirkoniumisopropylat werden unter trockener Atmosphäre 20.0 g (37.5 mmol) Produkt aus Beispiel 1 zugetropft. Die Komplexierung kann über die Abnahme der $\nu_{(OH \leftrightarrow COOH)}$ bei 3450 - 2500 $cm^{-1}$ sowie der entstehenden Zr-Carbonyl-Komplexbanden (1450 - 1600 $cm^{-1}$) verfolgt werden. Die resultierende klare Flüssigkeit kann direkt zur weiteren Umsetzung eingesetzt werden oder es kann zur weiteren Charakterisierung das abgespaltene i-Propanol abgezogen werden.

| | | |
|---|---|---|
| IR-Daten : | $\nu_{(CH \leftrightarrow aliphat.)}$<br>$\nu_{(C=O \leftrightarrow Methacryl/Ester)}$<br>$\nu_{(C=O \leftrightarrow Komplex)}$ | = 2970 - 2800 $cm^{-1}$<br>= 1727 $cm^{-1}$<br>= 1450 - 1600 $cm^{-1}$ |

Beispiel 4:

Hydrolyse und Kondensation des Produktes von Beispiel 3

Die propanolhaltige Lösung aus Beispiel 3 (37.5 mmol Zirkoniumkomplex) in 38 ml Essigester wird nach Zusatz von 2.5 g (7.5 mmol) 1.12-Dodecandioldimethacrylat zur Hydrolyse und Kondensation der Ethoxy- bzw. Propoxygruppen mir 2.7 g Wasser (incl.Katalysator) versetzt und gerührt. Nach vollständigem Umsatz (Nachweis über $H_2O$-Titration) kann die Lösung z.B. zum Beschichten von beliebigen Substraten (mit anschließender Härtung d.h. Polymerisation der Methacrylatgruppen) verwendet werden.

Beispiel 5:

Hydrolyse und Kondensation des Produktes von Beispiel 3

Die propanolhaltige Lösung aus Beispiel 3 (0.1 mol Zirkoniumkomplex) wird nach Zusatz von 200 ml Essigester zur Hydrolyse und Kondensation der Ethoxy- bzw. Propoxygruppen mit 7.1 g Wasser (incl. Katalysator) versetzt und gerührt. Nach wenigen Stunden (Nachweis über $H_2O$-Titration) kann die Lösung z.B. zum Beschichten von beliebigen Substraten (mit anschließender Härtung d.h. Polymerisation der Methacrylatgruppen) verwendet werden.

Beispiel 6:

Anbindung von $(C_4H_9)_2Sn(OCH_3)_2$ an die Carboxylgruppe des Produktes von Beispiel 1

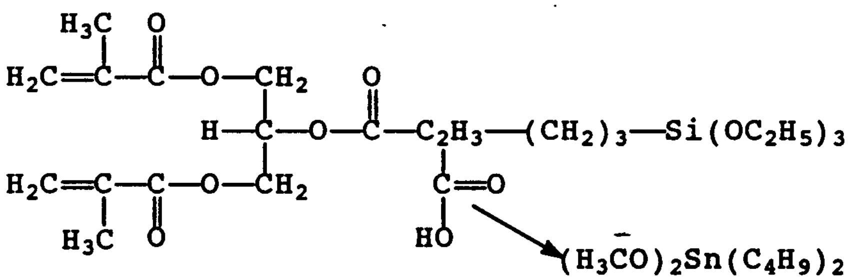

Zur Vorlage von 50 g (17.0 mmol) Dibutylzinndimethylat werden unter trockener Atmosphäre 9.1 g (17.0 mmol) des Produktes aus Beispiel 1 zugetropft. Die Anbindung kann über die Abnahme der $\nu_{(OH \leftrightarrow COOH)}$ bei 3450 - 2500 $cm^{-1}$ sowie der entstehenden Sn-Carbonylbanden (1450 - 1630 $cm^{-1}$) verfolgt werden. Die resultierende klare Flüssigkeit kann direkt zur weiteren Umsetzung eingesetzt werden oder zur weiteren Charakterisierung das abgespaltene Methanol abgezogen werden.

| | | |
|---|---|---|
| IR-Daten : | $\nu_{(CH \leftrightarrow aliphat.)}$ | = 2970 - 2800 $cm^{-1}$ |
| | $\nu_{(C=O \leftrightarrow Methacryl/Ester)}$ | = 1727 $cm^{-1}$ |
| | $\nu_{(C=O/C=C \leftrightarrow Komplex)}$ | = 1450 - 1600 $cm^{-1}$ |

Beispiel 7 :

Hydrolyse und Kondensation des Produktes von Beispiel 3 in Verbindung mit einem anderen Methacrylatsilan.

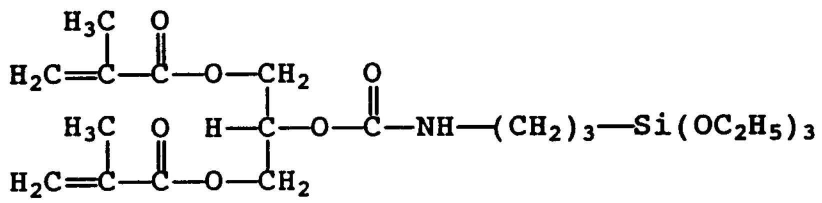

+

1.12-Dodecandioldimethacrylat

+

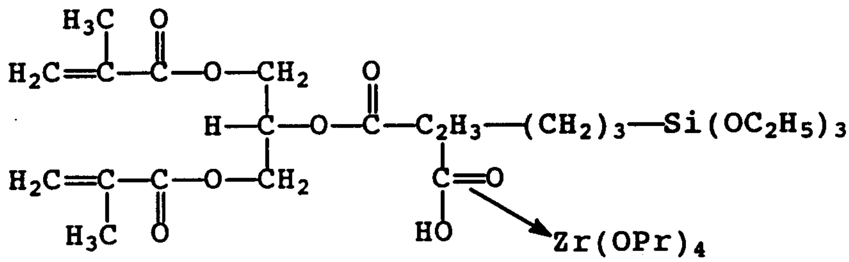

Zur Vorlage von 23.3 g (0.1 mol) Glycerin-1.3-dimethacrylat und Dibutylzinndilaurat (als Additionskatalysator) werden bei Raumtemperatur unter trockener Luft 25.3 g (0.1 mol) 3-Isocyanatopropyltriethoxysilan zugetropft. Nach eta 2-stündigem Rühren ist die Addition vollzogen (IR-Kontrolle). Es werden 6.9 g (20 mmol) 1.12-Dodecandioldimethacrylat, 100 ml Essigester sowie die propanolhaltige Lösung aus Beispiel 3 (40 mmol Zirkoniumkomplex) zugesetzt. Das Gemisch wird zur Hydrolyse und Kondensation der Ethoxy- bzw. Propoxygruppen mit 7.4 g Wasser (incl. Katalysator) versetzt und gerührt. Nach vollständigem Umsatz (Nachweis über $H_2O$-Titration) kann die Lösung direkt zum Beschichten von beliebigen Substraten (mit anschließender Härtung d.h. Polymerisation der Methacrylatgruppen) verwendet werden. Um ein lösungsmittelfreies Harz z.B. zur Formkörperherstellung zu erhalten, wird obige Lösung mit Wasser ausgeschüttelt, filtriert, einrotiert und an der Ölpumpe vollständig von flüchtigen Bestandteilen befreit. Das klare, nahezu farblose Harz wird in einer Ausbeute von ca. 96 % erhalten und kann so für die folgende Aushärtung (Beispiel 8) eingesetzt werden.

Beispiel 8 :

Herstellung von Prüfkörpern zur Bestimmung mechanischer und thermischer Daten.

In 12 g des Harzes aus Beispiel 7 wird 1 % Irgacure (UV-Initiator der Fa. Ciba-Geigy) gelöst und die Mischung in eine stäbchenförmige Form (2×2×25 mm) gegeben. Die Doppelbindungen werden im Rahmen einer UV-induzierten radikalischen Polymerisation umgesetzt. Dazu wird beidseitig je 100 Sekunden mit einem UV-Punktstrahler der Fa. Hönle bestrahlt. Mittels 3-Punktbiegeversuch wird das E-Modul sowie die Bruchfestigkeit der resultierenden Stäbchen bestimmt. Der thermische Ausdehnungskoeffizient $\alpha$ wird im Temperaturbereich von 5 - 50 °C mittels Dilatometer bestimmt.

E-Modul = 2840 MPa (± 100);
$\alpha$ = $76 \times 10^{-6}$ $K^{-1}$.
Festigkeit $\sigma_B$ = 93 MPa (± 10)

Beispiel 9 :

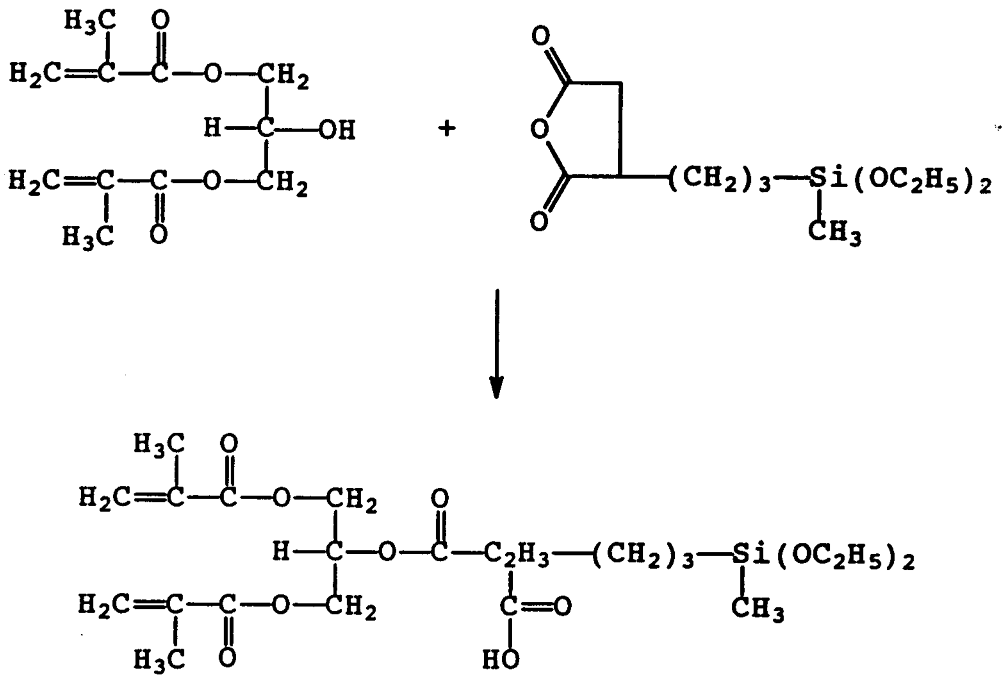

Zur Vorlage von 4.6 g (20 mmol) Glycerin-1.3-dimethacrylat werden unter trockener Atmosphäre 5.5 g (20 mmol) 3-(Methyldiethoxysilyl)-propylbernsteinsäureanhydrid zugetropft. Die Umsetzung kann über die Abnahme der Anhydrid-Carbonylbande ($\nu_{as(C=O)}$ = 1786 $cm^{-1}$, $\nu_{sy(C=O)}$ = 1864 $cm^{-1}$) verfolgt werden. Da ein Katalysator bzw. Lösungsmittel nicht zugesetzt werden muß, wird nach vollständiger Reaktion das gewünschte Produkt (flüssig) erhalten und kann ohne Reinigung für weitere Umsetzungen verwendet werden.

| | | |
|---|---|---|
| IR-Daten : | $\nu_{(OH \leftrightarrow COOH)}$ | = 3500 - 2500 $cm^{-1}$ |
| | $\nu_{(C=O \leftrightarrow Methacryl/Ester/COOH)}$ | = 1725 $cm^{-1}$ |
| | $\nu_{(C=C \leftrightarrow Methacryl)}$ | = 1638 $cm^{-1}$ |

Beispiel 10 :

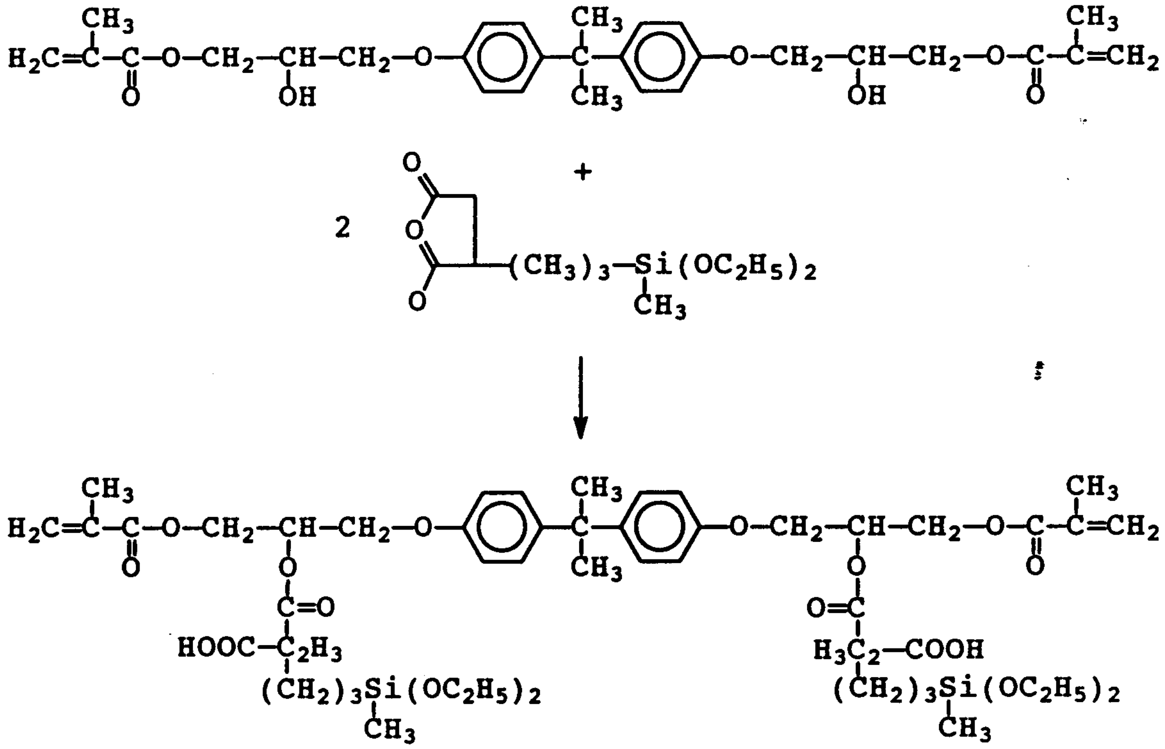

Zur Vorlage von 10.3 g (20 mmol) 2.2-Bis-[p-(2-hydroxy-3-methacryloyloxypropoxyl)-phenyl]propan in 20 ml THF werden unter trockener Atmosphäre 11.0 g (40 mmol) 3-(Methyldiethoxysilyl)-propylbernsteinsäureanhydrid zugetropft. Die Umsetzung kann über die Abnahme der Anhydrid-Carbonylbande ($\nu_{as(C=O)}$ = 1786 $cm^{-1}$, $\nu_{sy(C=O)}$ = 1864 $cm^{-1}$) verfolgt werden. Da ein Katalysator nicht zugesetzt werden muß, wird nach vollständiger Reaktion das gewünschte Produkt in Lösung erhalten und kann ohne Reinigung für weitere Umsetzungen verwendet werden. Zur Charakterisierung wird das Lösungsmittel abgezogen.

| | | |
|---|---|---|
| IR-Daten : | $\nu_{(OH \leftrightarrow COOH)}$ | = 3430 - 2400 $cm^{-1}$ |
| | $\nu_{(C=O \leftrightarrow Methacryl/Ester/COOH)}$ | = 1724 $cm^{-1}$ |
| | $\nu_{(C=C \leftrightarrow Methacryl)}$ | = 1638 $cm^{-1}$ |

Beispiel 11:

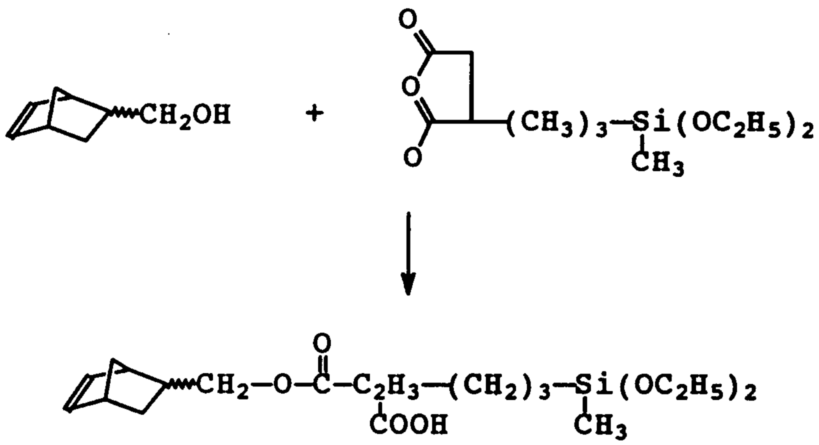

Zur Vorlage von 2.48 g (20 mmol) 2-(Hydroxymethyl)-5-norbornen werden unter trockener Atmosphäre 5.5 g (20 mmol) 3-(Mehylithxysilyl)-propylbernsteinsäureanhydrid zugetropft. Die Umsetzung kann über die Abnahme der Anhydrid-Carbonylbande ($_{vas(C=O)}$ = 1786 $cm^{-1}$, $\nu_{sy(C=O)}$ = 1864 $cm^{-1}$) verfolgt werden. Da ein Katalysator bzw. Lösungsmittel nicht zugesetzt werden muß, wird nach vollständiger Reaktion das gewünschte Produkt erhalten und kann ohne Reinigung für weitere Umsetzungen verwendet werden.

| | | |
|---|---|---|
| IR-Daten : | $\nu_{(OH \leftrightarrow COOH)}$<br>$\nu_{(C=O \leftrightarrow Ester/COOH)}$<br>$\nu_{(CH \leftrightarrow Olefin)}$ | = 3400 - 2400 $cm^{-1}$<br>= 1736/1711 $cm^{-1}$<br>= 3059 $cm^{-1}$ |

Beispiel 12 :

Hydrolyse und Kondensation des Produktes von Beispiel 11

Die Lösung von 8.0 g (20 mmol) Produkt aus Beispiel 11 in 40 ml Essigester wird zur Hydrolyse und Kondensation der Ethoxygruppen mit 0.58 g Wasser (Eigenkatalyse durch Säurefunktion bzw. mit zugesetztem Katalysator) versetzt und gerührt. Nach vollständigem Umsatz (Nachweis über $H_2O$-Titration) kann die Lösung z.B. zur Beschichtung (mit anschließender Aushärtung = Polymerisation der Methacrylatgruppen) von beliebigen Substraten verwendet werden. Um ein lösungsmittelfreies Harz, z.B. zur Formkörperherstellung, wird obige Lösung mit Wasser ausgeschüttelt, filtriert, einrotiert und an der Ölpumpe vollständig von flüchtigen Bestandteilen befreit. Das klare Harz wird in einer Ausbeute von ca. 96 % erhalten und kann so für die Aushärtung eingesetzt werden.

**Patentansprüche**

**1.** Hydrolysierbare und polymerisierbare Silane der allgemeinen Formel I,

$$B\{A-(Z)_d-\underset{R^2}{\underset{|}{R^1}}-R'-SiX_aR_b\}_c \qquad (I)$$

in der die Reste und Indices folgende Bedeutung haben:

B = ein geradkettiger oder verzweigter organischer Rest mit mindestens einer C=C-Doppelbindung und 4 bis 50 KohlenstoffaAtomen;
X = Wasserstoff, Halogen, Hydroxy, Alkoxy, Acyloxy, Alkylcarbonyl, Alkoxycarbonyl oder $NR''_2$;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoffatomen, wobei diese Reste durch Sauerstoff- und Schwefelatome oder durch Aminogruppen unterbrochen sein können;
R'' = Wasserstoff, Alkyl oder Aryl;
A = O, S oder NH für d = 1 und
Z = CO und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = COOH; oder
A = O, S oder NH für d = 1 und
Z = CO und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = H; oder
A = O, S, NH oder COO für d = 1 und
Z = $CHR^3$, mit $R^3$ gleich H, Alkyl, Aryl oder Alkylaryl, und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = OH; oder
A = O, S, NH oder COO für d = 0 und
$R^1$ = Alkylen, Arylen oder Alkylenarylen mit jeweils 1 bis 10 Kohlenstoffatomen, wobei diese Reste durch Sauerstoff- und Schwefelatome oder durch Aminogruppen unterbrochen sein können, und
$R^2$ = OH; oder
A = S für d = 1 und
Z = CO und
$R^1$ = N und
$R_2$ = H;
a = 1, 2 oder 3;
b = 0, 1 oder 2;
a+b = 3;
c = 1, 2, 3 oder 4.

**2.** Silane nach Anspruch 1, **dadurch gekennzeichnet**, daß in der allgemeinen Formel I die Reste und Indices die folgende Bedeutung haben:

X = $(C_1$-$C_4)$-Alkoxy, bevorzugt Methoxy und Ethoxy, oder Halogen, bevorzugt Chlor;
R = $(C_1$-$C_1)$-Alkyl, bevorzugt Methyl und Ethyl;
R' = $(C_1$-$C_4)$-Alkylen, bevorzugt Methylen, Ethylen und Propylen;

A, B, $R^1$, $R^2$, Z, a, b, a+b und c wie in Anspruch 1 definiert.

**3.** Silane nach Anspruch 1 oder 2, **dadurch gekennzeichnet**, daß B in der allgemeinen Formel I einen substituierten oder unsubstituierten organischen Rest mit einer oder mehreren Acrylat- und/oder Methacrylatgruppen darstellt.

**4.** Silane nach Anspruch 3, **dadurch gekennzeichnet**, daß sich in der allgemeinen Formel I B von Acrylsäureestern von Trimethybolpropan, Pentaerythrit, Dipentaerythrit, $C_2$-$C_4$-Alkandiolen, Polyethylenglycolen, Polypropylenglycolen oder, gegebenenfalls substituiertem und/oder alkoxyliertem, Bisphenol A ableitet.

**5.** Verfahren zur Herstellung der Silane nach Anspruch 1, **dadurch gekennzeichnet**, daß man in an sich bekannter Weise

a) ein cyclisches Carbonsäureanhydrid der allgemeinen Formel II,

$$O(CO)_2R^1\text{-}R'SiX_aR_b \qquad (II)$$

in der X, R, R', a, b und a+b wie in Anspruch 1 definiert sind und $R^1$ Alkylen, Arylen oder Alkylenarylen bedeutet,

einer Additionsreaktion mit einer Verbindung der allgemeinen Formel $B(AH)_C$ unterwirft, in der B und c wie in Anspruch 1 definiert sind und A O, S oder NH bedeutet; oder

b) ein Carbonsäurederivat der allgemeinen Formel III,

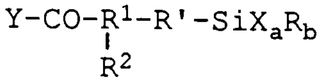 (III)

in der X, R, R', a, b und a+b wie in Anspruch 1 definiert sind, Y gleich Cl, OH oder OR* ist, $R^2$ gleich H, und $R^1$ und R* Alkylen oder Alkylenarylen bedeuten,

einer Kondensationsreaktion mit einer Verbindung der allgemeinen Formel $B(AH)_c$ unterwirft, in der B und c wie in Anspruch 1 definiert sind und A O, S oder NH bedeutet; oder

c) ein gegebenenfalls substituiertes Epoxid der allgemeinen Formel IV oder IX

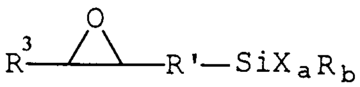

(IV)

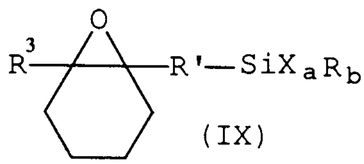

(IX)

in der X, R, R', $R^3$, a, b und a+b wie in Anspruch 1 definiert sind,

einer Additionsreaktion mit einer Verbindung der allgemeinen Formel $B(AH)_c$ unterwirft, in der B und c wie in Anspruch 1 definiert sind und A O, S, NH oder COO bedeutet; oder

d) ein Silan der allgemeinen Formel V

$$OCN\text{-}R'\text{-}SiX_aR_b \qquad (V)$$

in der X, R, R', a, b und a+b wie in Anspruch 1 definiert sind,

einer Additionsreaktion mit einer Verbindung der allgemeinen Formel $B(AH)_c$ unterwirft, in der B und c wie in Anspruch 1 definiert sind und A Schwefel bedeutet.

**6.** Verwendung der Silane nach Anspruch 1 zur Herstellung von Kieselsäurepolykondensaten oder von Kieselsäureheteropolykondensaten durch hydrolytische Kondensation von einer oder mehreren hydrolytisch kondensierbaren Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit, **dadurch gekennzeichnet,** daß 5 bis 100 Mol-Prozent, auf der Basis monomerer Verbindungen, der hydrolytisch kondensierbaren Verbindungen aus Silanen der allgemeinen Formel I ausgewählt werden,

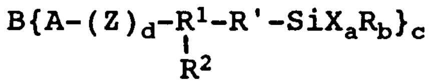

(I)

in der die Reste und Indices wie in Anspruch 1 definiert sind.

**7.** Verwendung nach Anspruch 6, **dadurch gekennzeichnet,** daß man als weitere hydrolytisch kondensierbare Verbindungen solche Verbindungen einsetzt, gegebenenfalls in vorkondensierter Form, die radikalisch oder ionisch polymerisierbar sind.

**8.** Verwendung nach Anspruch 6 oder 7, **dadurch gekennzeichnet,** daß man als weitere hydrolytisch kondensierbare Verbindungen des Siliciums eine oder mehrere Verbindungen der allgemeinen Formel VI, gegebenenfalls in vorkondensierter Form, einsetzt,

$$R_a(R''Z')_bSiX_{4-(a+b)} \qquad (VI)$$

in der die Reste und Indices folgende Bedeutung haben:

- R = Alkyl, Alkenyl, Aryl, Alkylaryl oder Arylalkyl,
- R'' = Alkylen oder Alkenylen, wobei diese Reste durch Sauerstoff- oder Schwefelatome oder - NH-Gruppen unterbrochen sein können,
- X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
- Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
- a = 0, 1, 2, oder 3,
- b = 0, 1, 2, oder 3, mit a+b = 1,2 oder 3 .

**9.** Verwendung nach einem oder mehreren der Ansprüche 6 bis 8, **dadurch gekennzeichnet,** daß man als weitere hydrolytisch kondensierbare Verbindungen des Siliciums, eine oder mehrere Verbindungen der allgemeinen Formel VII, gegebenenfalls in vorkondensierter Form, einsetzt,

$$\{X_nR_kSi[(R^2A)_l]_{4-(n+k)}\}_xB \qquad (VII)$$

in der die Reste und Indices folgende Bedeutung haben:

- A = O, S, PR', POR', NHC(O)O oder NHC(O)NR', mit R' = Wasserstoff, Alkyl oder Aryl,
- B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl,
- R = Alkyl, Alkenyl, Aryl, Alkylaryl oder Arylalkyl,
- $R^2$ = Alkylen, Arylen oder Alkylenarylen,
- X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
- n = 1, 2 oder 3,
- k = 0, 1 oder 2,
- l = 0 oder 1,
- x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR' steht.

**10.** Verwendung nach Anspruch 9, **dadurch gekennzeichnet,** daß man eine Verbindung der allgemeinen Formel VII einsetzt, in der sich der Rest B von einer substituierten oder unsubstituierten Verbindung B' mit zwei oder mehreren

Acrylat- und/oder Methacrylatgruppen ableitet.

**11.** Verwendung nach einem oder mehreren der Ansprüche 6 bis 10, **dadurch gekennzeichnet,** daß man als weitere hydrolytisch kondensierbare Verbindungen des Siliciums, eine oder mehrere Verbindungen der allgemeinen Formel VIII, gegebenenfalls in vorkondensierter Form, einsetzt,

$$Y_nSiX_mR_{4-(n+m)} \qquad \text{(VIII)}$$

in der die Reste X, Y und R gleich oder verschieden sind und folgende Bedeutung haben:

R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Y = ein Substituent, der einen substituierten oder unsubstituierten 1,4,6-Trioxaspiro-[4,4]-nonanrest enthält,
n = 1, 2 oder 3,
m = 1, 2 oder 3, mit $n+m \leq 4$ .

**12.** Verwendung nach einem oder mehreren der Ansprüche 6 bis 11, **dadurch gekennzeichnet,** daß man als weitere hydrolytisch kondensierbare Komponente eine oder mehrere, im Reaktionsmedium lösliche Aluminium, Titan- oder Zirkoniumverbindungen, gegebenenfalls in vorkondensierter Form, der Formel

$$AlR°_3 \text{ oder } MX_yR_z$$

einsetzt, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel (I) definiert sind.

**13.** Verwendung nach einem oder mehreren der Ansprüche 6 bis 12, **dadurch gekennzeichnet,** daß man dem Polykondensat einen oder mehrere Initiatoren zusetzt und das Polykondensat thermisch, photochemisch, kovalent-nucleophil oder redoxinduziert härtet.

**14.** Verwendung nach einem oder mehreren der Ansprüche 6 bis 13, **dadurch gekennzeichnet,** daß man dem Polykondensat vor der Polymerisation eine oder mehrere radikalisch und/oder ionisch polymerisierbare Komponenten zusetzt.

**15.** Verwendung der Silane nach Anspruch 1 zur Herstellung von Polymerisaten durch radikalische Polymerisation einer oder mehrerer C=C-Doppelbindungen enthaltender Verbindungen und gegebenenfalls anderer radikalisch polymerisierbarer Verbindungen und gegebenenfalls durch ionische Polymerisation einer oder mehrerer ionisch polymerisierbarer Verbindungen, durch Einwirkung von Wärme und/oder elektromagnetischer Strahlung und/oder redoxinduziert und/oder kovalent-nucleophil, gegebenenfalls in Anwesenheit eines oder mehrerer Initiatoren und/oder eines Lösungsmittels, **dadurch gekennzeichnet,** daß 5 bis 100 Molprozent, auf der Basis monomerer Verbindungen aus Silanen der Formel I

$$B\{A-(Z)_d-\underset{R^2}{\underset{|}{R^1}}-R'-SiX_aR_b\}_c \qquad \text{(I)}$$

ausgewählt werden, in der die Reste und Indices wie in Anspruch 1 definiert sind.

**16.** Verwendung nach Anspruch 15, **dadurch gekennzeichnet,** daß man als kationisch polymerisierbare Verbindungen eines oder mehrere Silane der allgemeinen Formel VIII einsetzt,

$$Y_nSiX_mR_{4-(n+m)} \qquad \text{(VIII)}$$

in der die Reste und Indices wie in Anspruch 11 definiert sind.

**17.** Verwendung nach Anspruch 15 oder 16, **dadurch gekennzeichnet,** daß man als kationisch polymerisierbare Verbindungen einen oder mehrere Spiroorthoester, Spiroorthocarbonate, bicyclische Spiroorthoester, Methacryloyl-Spiroorthoester, Mono- oder Oligoepoxide einsetzt.

**18.** Verwendung nach einem oder mehreren der Ansprüche 15 bis 17, **dadurch gekennzeichnet,** daß man als weitere radikalisch polymerisierbare Verbindungen eine oder mehrere Verbindungen der allgemeinen Formel VII einsetzt,

$$\{X_nR_kSi[(R^2A)_l]_{4-(n+k)}\}_XB \qquad \text{(VII)}$$

in der die Reste und Indices wie in Anspruch 9 definiert sind.

**19.** Verwendung nach einem oder mehreren der Ansprüche 15 bis 18, **dadurch gekennzeichnet,** daß man das Polymerisat, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensiert.

**20.** Verwendung nach Anspruch 19, **dadurch gekennzeichnet,** daß man als weitere kondensierbare Verbindungen des Siliciums eine oder mehrere Verbindungen der allgemeinen Formel VI, gegebenenfalls in vorkondensierter Form, einsetzt,

$$R_a(R''Z')_bSiX_{4-(a+b)} \qquad \text{(VI)}$$

in der die Reste und Indices wie in Anspruch 8 definiert sind.

## Claims

**1.** Hydrolysable and polymerisable silanes of the general formula I,

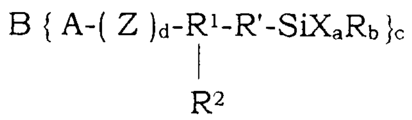

(I)

in which the radicals and indices have the following meanings:

B = an unbranched or branched organic radical with at least one C=C double bond and 4 to 50 carbon atoms;
X = hydrogen, halogen, hydroxy, alkoxy, acyloxy, alkylcarbonyl, alkoxycarbonyl or $NR''_2$;
R = alkyl, alkenyl, aryl, alkylaryl or arylalkyl;
R' = alkylene, arylene, arylene alkylene or alkylene arylene with respectively 0 to 10 carbon atoms, these radicals being able to be interrupted by oxygen- and sulphur atoms or by amino groups;
R'' = hydrogen, alkyl or aryl;
A = O, S or NH for d = 1 and
Z = CO and
$R^1$ = alkylene, arylene or alkylene arylene with respectively 1 to 10 carbon atoms, these radicals being able to be interrupted by oxygen- and sulphur atoms or by amino groups and
$R^2$ = COOH; or
A = O, S or NH for d = 1 and
Z = CO and
$R^1$ = alkylene, arylene or alkylene arylene with respectively 1 to 10 carbon atoms, these radicals being able to be interrupted by oxygen- and sulphur atoms or by amino groups and
$R^2$= H; or
A = O, S, NH or COO for d = 1 and
Z = $CHR^3$, with $R^3$ equals H, alkyl, aryl or alkylaryl, and

$R^1$ = alkylene, arylene or alkylene arylene with respectively 1 to 10 carbon atoms, these radicals being able to be interrupted by oxygen- and sulphur atoms or by amino groups and
$R^2$ = OH; or

A = O, S, NH or COO for d = O and
$R^1$ = alkylene, arylene or alkylene arylene with respectively 1 to 10 carbon atoms, these radicals being able to be interrupted by oxygen- and sulphur atoms or by amino groups and
$R^2$= OH; or

A = S for d = 1 and
Z = CO and
$R^1$ = N and
$R^2$ = H;

a = 1, 2 or 3;
b = 0, 1 or 2;
a + b = 3;
c = 1, 2, 3 or 4.

**2.** Silanes according to claim 1, <u>characterised in that</u> in the general formula I the radicals and indices have the following meaning:

X = ($C_1$ - $C_4$) - alkoxy, preferably methoxy and ethoxy, or halogen, preferably chlorine;
R = ($C_1$ - $C_4$) - alkyl, preferably methyl and ethyl;
$R^1$ = ($C_1$ - $C_4$) - alkylene, preferably methylene, ethylene and propylene;

A, B, $R^1$, $R^{2,}$, Z, a, b, a+b and c defined as in claim 1.

**3.** Silanes according to claim 1 or 2, <u>characterised in that</u> B in the general formula I represents a substituted or unsubstituted organic radical with one or more acrylate- and/or methacrylate groups.

**4.** Silanes according to claim 3, <u>characterised in that</u> in the general formula I, B is derived from acrylic-acid esters of trimethylolpropane, pentaerythrite, dipentaerythrite, $C_2$ - $C_4$ alkane diols, polyethylene glycols, polypropylene glycols or, possibly substituted and/or alkoxylised, bisphenol A.

**5.** Method for producing silanes according to claim 1, <u>characterised in that</u>, in a manner known per se

a) a cyclic carbonic acid anhydride of the general formula II

$$O(CO)_2R^1\text{-}R'\text{-}SiX_aR_b \qquad (II)$$

in which X, R, R, a, b and a+b are defined as in claim 1 and R' means alkylene, arylene or alkylene arylene,

is subjected to an addition reaction with a compound of the general formula $B(AH)_c$, in which B and c are defined as in claim 1 and A means O, S or NH; or

b) a carboxylic acid derivative of the general formula III,

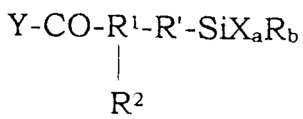
(III)

in which X, R, R', a, b and a+b are defined as in claim 1, Y is equal to Cl, OH or OR*, $R^2$ is equal to H, and $R^1$ and R* mean alkylene or alkylene arylene,

is subjected to a condensation reaction with a compound of the general formula $B(AH)_c$, in which B and c are

defined as in claim 1 and A means O, S or NH; or

c) a possibly substituted epoxide of the general formula IV or IX

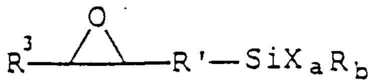

(IV)

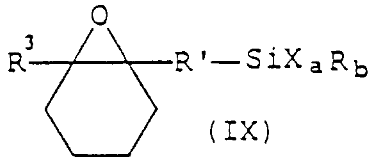

(IX)

in which X, R, R' $R^3$, a, b and a + b are defined as in claim 1,

is subjected to an addition reaction with a compound of the general formula $B(AH)_c$, in which B and c are defined as in claim 1 and A means O, S, NH or COO; or

d) a silane of the general formula V

$$OCN\text{-}R'\text{-}SiX_aR_b \qquad (V)$$

in which X, R, R', a, b and a + b are defined as in claim 1,

is subjected to an addition reaction with a compound of the general formula $B(AH)_c$, in which B and c are defined as in claim 1 and A means sulphur.

**6.** Use of silanes according to claim 1 for producing silicic acid polycondensates or silicic acid heteropolycondensates by hydrolytic condensation of one or more hydrolytically condensable compounds of silicon and possibly other elements from the group B, Al, P, Sn, Pb, the transition metals, the lanthanides and actinides, and/or precondensates derived from the above-mentioned compounds, possibly in the presence of a catalyst and/or a solvent by the effect of water or moisture, characterised in that 5 to 100% mol, on the basis of monomer compounds, of the hydrolytically condensable compounds are chosen from silanes of the general formula I,

$$B\{A\text{-}(Z)_d\text{-}\underset{\substack{|\\R^2}}{R^1}\text{-}R'\text{-}SiX_aR_b\}_c \qquad (I)$$

in which the radicals and indices are defined as in claim 1.

**7.** Use according to claim 6, characterised in that those compounds are used as further hydrolytically condensable compounds, possibly in a precondensed form, which are radically or ionically polymerisable.

**8.** Use according to claim 6 or 7, characterised in that one or more compounds of the general formula VI, possibly in a precondensed form, are used as further hydrolytically condensable compounds of silicon,

$$R_a(R''Z')_bSiX_{4-(a+b)} \qquad (VI)$$

in which the radicals and indices have the following meaning:

R = alkyl, alkenyl, aryl, alkylaryl or arylalkyl,
R' = alkylene or alkenylene, these radicals being able to be interrupted by oxygen- or sulphur atoms or -NH groups,
X = hydrogen, halogen, hydroxy, alkoxy, acyloxy, alkylcarbonyl, alkoxycarbonyl or $NR'_2$,

with R' = hydrogen, alkyl or aryl,

Z = halogen or a possibly substituted amino-, amides, aldehyde-, alkylcarbonyl-, carboxy-, mercapto-, cyano-, alkoxy-, alkoxycarbonyl, sulfonic acid-, phosphoric acid-, acryloxy-, methacryloxy-, epoxy- or vinyl group,

a = 0, 1, 2 or 3,

b = 0, 1, 2 or 3 with a + b =1, 2 or 3 .

**9.** Use according to one or more of the claims 6 to 8, <u>characterised in that</u> one or more compounds of the general formula VII, possibly in a precondensed form, are used as further hydrolytically condensable compounds of silicon,

$$\{X_nR_kSi[(R^2A)_1]_{4-(n+k)}\}_xB \qquad (VII)$$

in which the radicals and indices have the following meaning:

A = O, S, PR', POR', NHC(O)O or NHC(O)NR', with R' = hydrogen, alkyl or aryl,

B = an unbranched or branched organic radical which is derived from a compound B' with at least one (for 1 = 1 and A =NHC(O)O or NHC(O)NR') or at least two C=C double bonds and 5 to 50 carbon atoms, with R' = hydrogen, alkyl or aryl,

R = alkyl, alkenyl, aryl, alkylaryl or arylalkyl,

$R^2$ = alkylene, arylene or alkylene arylene,

X = hydrogen, halogen, hydroxy, alkoxy, acyloxy, alkylcarbonyl, alkoxycarbonyl or $NR'_2$; with R' = hydrogen, alkyl or aryl,

n = 1, 2 or 3,

k = 0, 1 or 2,

l = 0 or 1,

x = a whole number, the maximum value of which corresponds to the number of double bonds in the compound B' minus 1, or is equal to the number of double bonds in the compound B', if 1 = 1 and A stands for NHC(O)O or NHC(O)NR'.

**10.** Use according to claim 9, <u>characterised in that</u> a compound of the general formula VII is used, in which the radical B is derived from a substituted or unsubstituted compound B' with two or more acrylate-and/or methacrylate groups.

**11.** Use according to one or more of the claims 6 to 10, <u>characterised in that</u> one or more compounds of the general formula VIII, possibly in a precondensed form, are used as further hydrolytically condensable compounds of silicon,

$$Y_nSiX_mR_{4-(n+m)} \qquad (VIII)$$

in which the radicals X, Y and R are the same or different and have the following meaning:

R = alkyl, alkenyl, aryl, alkylaryl or arylalkyl,

X = hydrogen, halogen, hydroxy, alkoxy, acyloxy, alkylcarbonyl alkoxycarbonyl or $NR'_2$, with R' = hydrogen, alkyl or aryl,

Y = a substituent which contains a substituted or unsubstituted 1,4,6-trioxaspiro-[4,4]-nonane radical,

n = 1, 2 or 3,

m = 1, 2 or 3, with $n + m \leq 4$.

**12.** Use according to one or more of the claims 6 to 11, <u>characterised in that</u> one or more aluminium-, titanium- or zirconium compounds, which are soluble in the reaction medium and possibly in a precondensed form, are used as further hydrolytically condensable components, having the formula

$$AlR°_3 \text{ or } MX_yR_z$$

in which M means titanium or zirconium, the radicals R, R° and X are the same or different, R° represents halogen, hydroxy, alkoxy or acyloxy, y is a whole number from 1 to 4, especially 2 to 4, z stands for 0, 1, 2 or 3, preferably for 0, 1 or 2 and X and R are defined as in the case of the general formula (I).

**13.** Use according to one or more of the claims 6 to 12, <u>characterised in that</u> one or more initiators is added to the polycondensate and the polycondensate is cured thermally, photochemically, covalent-nucleophilically or by redox-induction.

**14.** Use according to one or more of the claims 6 to 13, characterised in that one or more radically and/or ionically polymerisable components are added to the polycondensate before polymerisation.

**15.** Use of the silanes according to claim 1 for producing polymers by radical polymerisation of one or more compounds containing C=C double bonds and possibly of other compounds which can be polymerised radically and possibly by ionic polymerisation of one or more compounds which can be polymerised ionically, by the effect of heat and/or by electromagnetic radiation and/or redox-induction and/or covalent-nucleophilically, possibly in the presence of one or more initiators and/or a solvent, characterised in that 5 to 100% mol, on the basis of monomer compounds, are chosen from silanes of the general formula (I),

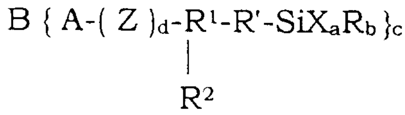
(I)

in which the radicals and the indices are defined as in claim 1.

**16.** Use according to claim 15, characterised in that one or more silanes of the general formula VIII are used as cationically polymerisable compounds,

$$Y_nSiX_mR_{4-(n+m)} \qquad \text{(VIII)}$$

in which the radicals and indices are defined as in claim 11.

**17.** Use according to claim 15 or 16, characterised in that one or more spiro orthoesters, spiro orthocarbonates, bicyclic spiro orthoesters, methacryloyl-spiro orthoesters, mono- or oligo epoxides are used as cationically polymerisable compounds.

**18.** Use according to one or more of the claims 15 to 17, characterised in that one or more compounds of the general formula VII are used as further radically polymerisable compounds,

$$\{X_nR_kSi[(R^2A)_1]_{4-(n+k)}\}_xB \qquad \text{(XII)}$$

in which the radicals and indices are defined as in claim 9.

**19.** Use according to one or more of the claims 15 to 18, characterised in that the polymer is hydrolytically condensed, possibly in the presence of further hydrolytically condensable compounds of silicon and possibly other elements from the group B, Al, P, Sn, Pb, the transition metals, the lanthanides and actinides, and/or precondensates derived from the above-mentioned compounds, by the effect of water or moisture, possibly in the presence of a catalyst and/or a solvent.

**20.** Use according to claim 19, characterised in that one or more compounds of the general formula VI, possibly in a precondensed form, are used as further condensable compounds of silicon,

$$R_a(R''Z')_bSiX_{4-(a+b)} \qquad \text{(VI)}$$

in which the radicals and indices are defined as in claim 8.

## Revendications

**1.** Silanes hydrolysables et polymérisables de formule générale I,

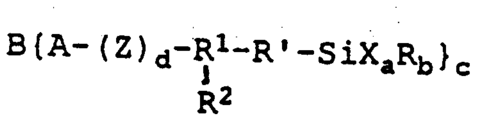

(I)

dans laquelle les restes et indices ont la signification suivante :

- B = un reste organique à chaîne droite ou ramifié ayant au moins une double liaison C = C et de 4 à 50 atomes de carbone,
- X = hydrogène, halogène, hydroxy, alkoxy, acyloxy, alkylcarbonyl, alkoxycarbonyl, ou $NR''_2$,
- R = alkyle, alkényle, aryle, alkylaryle ou arylalkyle,
- R' = alkylène, arylène, arylènalkylène, ou alkylènarylène ayant respectivement de 0 à 10 atomes de carbone, ces restes pouvant être interrompus par des atomes d'oxygène et de soufre ou par des groupes amino,
- R" = hydrogène, alkyle ou aryle,
- A = O, S, ou NH pour d = 1 et
  - $Z_1$ = CO et
  - $R^1$ = alkylène, arylène, ou alkylènarylène avec respectivement de 1 à 10 atomes de carbone, ces restes pouvant être interrompus par des atomes d'oxygène et de soufre ou par des groupes amino et,
  - $R^2$ = COOH, ou
- A = O, S, ou NH pour d = 1 et
  - Z = CO et
  - $R^1$ = alkylène, arylène ou alkylènarylène avec respectivement de 1 à 10 atomes de carbone, ces restes pouvant être interrompus par des atomes d'oxygène et de soufre ou par des groupes amino, et
  - $R^2$ = H, ou
- A = O, S, NH ou COO pour d = 1 et
  - Z = $CHR^3$, avec $R^3$ égale H, alkyle, aryle ou alkylaryle, et
  - $R^1$ = alkylène, arylène, ou alkylènarylène avec respectivement de 1 à 10 atomes de carbone, ces restes pouvant être interrompus par des atomes d'oxygène et de soufre ou par des groupes amino, et
  - $R^2$ = OH, ou
- A = O, S, NH ou COO pour d = O et
  - $R^1$ = alkylène, arylène, ou alkylènarylène avec respectivement de 1 à 10 atomes de carbone, ces restes pouvant être interrompus par des atomes d'oxygène et de soufre ou par des groupes amino et
  - $R^2$ = OH, ou
- A = S, pour d = 1 et
  - Z = CO et
  - $R^1$ = N et
  - $R^2$ = H
- a = 1, 2 ou 3,
- b = 0,1 ou 2,
- a+b = 3
- c = 1, 2, 3 ou 4

**2.** Silanes selon la revendication 1, caractérisés en ce que dans la formule générale I, les restes et indices ont la signification suivante :

- X = alkoxy en $C_1$-$C_4$, de préférence méthoxy et éthoxy, ou halogène, de préférence le chlore,
- R = alkyle en $C_1$-$C_4$, de préférence le méthyle et l'éthyle,
- R' = alkylène en $C_1$-$C_4$, de préférence méthylène, éthylène et propylène,

A, B, $R^1$, $R^2$, Z, a, b, a+b, et c, étant définis comme à la revendication 1.

**3.** Silanes selon la revendication 1 ou 2, caractérisés en ce que B dans la formule générale I représente un reste organique substitué ou non substitué avec un ou plusieurs groupes acrylate et/ou méthacrylate.

**4.** Silanes selon la revendication 3, caractérisés en ce que dans la formule générale I, B dérive d'esters d'acide acrylique du triméthylolpropane, du pentaérythritol, du dipentaérythritol, des (alkane en $C_2$-$C_4$)diols, des polyéthylèneglycols, des polypropylèneglycols, ou du bis-phénol A éventuellement substitué et/ou alkoxylé.

**5.** Procédé d'obtention des silanes selon la revendication 1, caractérisé en ce qu' on soumet d'une manière connue en soi,

a) un anhydride d'acide carboxylique cyclique de formule générale II,

$$O(CO)_2R^1\text{-}R'\text{-}SiX_aR_b \quad (II)$$

dans laquelle X, R, R', a, b et a+b sont définis comme à la revendication 1, et $R^1$ signifie un alkylène, un arylène, ou un alkylènarylène,

à une réaction d'addition avec un composé de formule générale $B(AH)_c$, dans laquelle B et c sont définis comme à la revendication 1 et A signifie O, S ou NH, ou
b) un dérivé d'acide carboxylique de formule générale III,

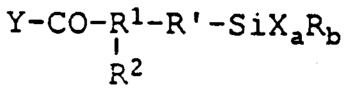

(III)

dans laquelle X, R, R', a, b et a+b sont définis comme à la revendication 1, Y est égal à Cl, OH ou OR*, $R^2$ est égal à H et $R^1$ et R* signifient un alkylène ou un alkylènarylène,

à une réaction de condensation avec un composé de formule générale $B(AH)_c$, dans laquelle B et c sont définis comme à la revendication 1 et A signifie O, S ou NH, ou
c) un époxyde éventuellement substitué de formule générale IV ou IX

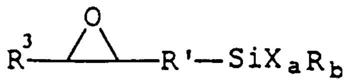

(IV)

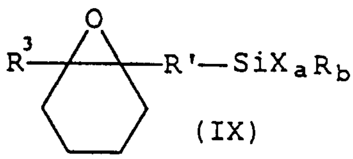

(IX)

dans lesquelles X, R, R', $R^3$, a, b, et a+b sont définis comme à la revendication 1,

à une réaction d'addition avec un composé de formule générale $B(AH)_c$ dans laquelle B et c sont définis comme à la revendication 1 et A signifie O, S, NH ou COO, ou
d) un silane de formule générale V,

$$OCN\text{-}R'\text{-}SiX_aR_b \quad (V)$$

dans laquelle X, R, R', a, b et a+b sont définis comme à la revendication 1,

à une réaction d'addition avec un composé de formule générale $B(AH)_c$ dans laquelle B et c sont définis comme à la revendication 1 et A signifie du soufre.

**6.** Utilisation des silanes selon la revendication 1, pour l'obtention de polycondensats d'acide silicique ou d'hétéropolycondensats d'acide silicique, par condensation hydrolytique de un ou plusieurs composés du silicium condensables hydrolytiquement, et le cas échéant d'autres éléments choisis dans le groupe B, Al, P, Sn, Pb, des métaux de transition, des lanthanides et des actinides et/ou des précondensats dérivés des composés mentionnés ci-dessus, le cas échéant en présence d'un catalyseur et/ou d'un solvant, par action d'eau ou d'humidité,
caractérisée en ce que
de 5 à 100 % molaire, sur la base de composés monomères, des composés condensables hydrolytiquement, sont choisis parmi les silanes de formule générale I,

$$B\{A-(Z)_d-\underset{\substack{|\\R^2}}{R^1}-R'-SiX_aR_b\}_c \qquad (I)$$

dans laquelle les restes et indices sont définis comme à la revendication 1.

**7.** Utilisation selon la revendication 6,
caractérisée en ce qu'
on met en oeuvre comme autres composés condensables hydrolytiquement, des composés le cas échéant sous forme précondensée, qui sont polymérisables par voie radicalaire ou ionique.

**8.** Utilisation selon la revendication 6 ou 7,
caractérisée en ce qu'
on utilise comme autres composés du silicium condensables hydrolytiquement, un ou plusieurs composés de formule générale VI, le cas échéant sous forme précondensée,

$$R_a(R''Z')_bSiX_{4-(a+b)} \qquad (VI)$$

dans laquelle les restes et indices ont la signification suivante :

| | |
|---|---|
| R | = alkyle, alkényle, aryle, alkylaryle, ou arylalkyle, |
| R'' | = alkylène ou alkénylène dans lesquels ces restes peuvent être interrompus par des atomes d'oxygène ou de soufre ou des groupes NH, |
| X | = hydrogène, halogène, hydroxy, alkoxy, acyloxy, alkylcarbonyle, alkoxycarbonyle ou $NR'_2$, avec R' = hydrogène, alkyle ou aryle, |
| Z' | = halogène ou un groupe éventuellement substitué amino, amide, aldéhyde, alkylcarbonyle, carboxy, mercapto, cyano, alkoxy, alkoxycarbonyle, acide sulfonique, acide phophorique, acryloxy, méthacryloxy, époxy ou vinyle, |
| a | = 0, 1, 2 ou 3 |
| b | = 0, 1, 2 ou 3 avec a+b = 1, 2 ou 3 . |

**9.** Utilisation selon l'une ou plusieurs des revendications 6 à 8,
caractérisée en ce qu'
on met en oeuvre comme autres composés du silicium condensables hydrolytiquement, un ou plusieurs composés de formule générale VII, le cas échéant sous forme précondensée,

$$\{X_nR_kSi[(R^2A)_1]_{4-(n+k)}\}_xB \qquad (VII)$$

dans laquelle les restes et indices ont la signification suivante :

| | |
|---|---|
| A | = O, S, PR', POR', NHC(O)O ou NHC(O)NR', avec R' = hydrogène, alkyle ou aryle, |
| B | = reste organique à chaîne droite ou ramifié, qui dérive d'un composé B' avec au moins une (pour l = 1, et A = NHC(O)O ou NHC(O)NR') ou au moins deux double liaisons C=C, et de 5 à 50 atomes de carbone, avec R' = hydrogène, alkyle ou aryle |
| R | = alkyle, alkényle, aryle, alkylaryle ou arylalkyle, |
| $R^2$ | = alkylène, arylène, ou alkylènarylène, |
| X | = hydrogène, halogène, hydroxy, alkoxy, acyloxy, alkylcarbonyle, alkoxycarbonyle, ou $NR'_2$, avec R' = hydro- |

gène, alkyle ou aryle,

n = 1, 2 ou 3

k = 0, 1 ou 2

l = 0 ou 1

x = un nombre entier dont la valeur maximale correspond au nombre de double liaisons dans le composé B' moins 1, ou est égal au nombre de double liaisons dans le composé B', quand l = 1 et A représente NHC(O)O ou NHC(O)NHR'.

**10.** Utilisation selon la revendication 9,
caractérisée en ce qu'
on met en oeuvre un composé de formule générale VII dans lequel le reste B dérive d'un composé B' substitué ou non substitué avec deux ou davantage de groupes acrylate et/ou méthacrylate.

**11.** Utilisation selon l'une ou plusieurs des revendications 6 à 10,
caractérisée en ce qu'
on met en oeuvre comme autres composés condensables hydrolytiquement du silicium, un ou plusieurs composés de formule générale VIII, le cas échéant sous forme précondensée,

$$Y_nSiX_mR_{4-(n+m)} \qquad \text{(VIII)}$$

dans laquelle les restes X, Y et R sont identiques ou différents et ont la signification suivante :

R = alkyle, alkényle, aryle, alkylaryle ou arylalkyle,

X = hydrogène, halogène, hydroxy, alkoxy, acyloxy, alkylcarbonyle, alkoxycarbonyle, ou $NR'_2$, avec R' = hydrogène, alkyle ou aryle,

Y = un substituant qui renferme un reste 1, 4, 6-trioxaspiro[4,4]nonane, substitué ou non substitué,

n = 1, 2 ou 3

m = 1, 2 ou 3 avec $n+m \leq 4$

**12.** Utilisation selon l'une ou plusieurs des revendications 6 à 11,
caractérisée en ce qu'
on met en oeuvre comme autres composants condensables hydrolytiquement, un ou plusieurs composés de l'aluminium, du titane ou du zirconium éventuellement sous forme précondensée de formule :

$$AlR°_3 \text{ ou } MX_yR_z$$

dans laquelle M signifie le titane ou le zirconium, les restes R, R° et X sont identiques ou différents,

R° représente un halogène, un hydroxy, un alkoxy ou un acyloxy,

y est un nombre entier allant de 1 à 4, en particulier de 2 à 4,

z représente 0, 1, 2 ou 3, de préférence 0, 1 ou 2, et X et

R sont définis comme dans le cas de la formule générale (I).

**13.** Utilisation selon l'une ou plusieurs des revendications 6 à 12,
caractérisée en ce qu'
on ajoute au polycondensat un ou plusieurs promoteurs et on durcit le polycondensat thermiquement, photochimiquement, par voie nucléophile covalente, ou par induction redox.

**14.** Utilisation selon l'une ou plusieurs des revendications 6 à 13,
caractérisée en ce qu'
on ajoute au polycondensat avant la polymérisation, un ou plusieurs composants polymérisables par voie radicalaire et/ou ionique.

**15.** Utilisation des silanes selon la revendication 1, pour la production de polymérisats obtenus par polymérisation radicalaire de composés contenant une ou plusieurs double liaisons C=C et le cas échéant d'autres composés polymérisables par voie radicalaire, et le cas échéant par polymérisation par voie ionique d'un ou plusieurs composés polymérisables par voie ionique, par action de la chaleur et/ou d'un rayonnement électromagnétique, et/ou par induction redox et/ou d'une manière nucléophile covalente, le cas échéant en présence d'un ou plusieurs promoteurs et/ou d'un solvant, caractérisée en ce que de 5 à 100 pour cent molaire sur la base des composés mono-mères sont choisis parmi les silanes de formule I,

$$B\{A-(Z)_d-\underset{\substack{|\\R^2}}{R^1}-R'-SiX_aR_b\}_c \qquad (I)$$

dans laquelle les restes et indices sont définis comme à la revendication 1.

**16.** Utilisation selon la revendication 15, caractérisée en ce qu' on met en oeuvre comme composés polymérisables par voie cationique, un ou plusieurs silanes de formule générale VIII,

$$Y_nSiX_mR_{4-(n+m)} \qquad (VIII)$$

dans laquelle les restes et indices sont définis comme à la revendication 1.

**17.** Utilisation selon la revendication 15 ou la revendication 16, caractérisée en ce qu' on met en oeuvre comme composés polymérisables par voie cationique, un ou plusieurs spiroorthoesters, spiroorthocarbonates, spiroorthoesters bicycliques, méthacryloylspiroorthoesters, mono- ou oligoepoxydes.

**18.** Utilisation selon l'une ou plusieurs des revendications 15 à 17, caractérisée en ce qu' on met en oeuvre comme autres composés polymérisables par voie radicalaire, un ou plusieurs composés de formule générale VII,

$$\{X_nR_kSi[(R^2A)_1]_{4-(n+k)}\}_xB \qquad (VII)$$

dans laquelle les restes et les indices sont définis comme à la revendication 9.

**19.** Utilisation selon l'une ou plusieurs des revendications 15 à 18, caractérisée en ce qu' on condense par voie hydrolytique le polymérisat, le cas échéant en présence d'autres composés condensables hydrolytiquement du silicium, et le cas échéant d'autres éléments choisis dans le groupe B, Al, P, Sn, Pb, des métaux de transition, des lanthanides, et des actinides, et/ou des précondensats dérivés des composés mentionnés ci-dessus, par action de l'eau ou de l'humidité, le cas échéant en présence d'un catalyseur et/ou d'un solvant.

**20.** Utilisation selon la revendication 19, caractérisée en ce qu' on met en oeuvre comme autres composés condensables du silicium, un ou plusieurs composés de formule générale VI, éventuellement sous forme précondensée,

$$R_a(R''Z')_bSiX_{4-(a+b)} \qquad (VI)$$

dans laquelle les restes et les indices sont définis comme à la revendication 8.